# EUROPEAN PATENT SPECIFICATION

(11) **EP 3 691 209 B1**
(45) Date of publication and mention of the grant of the patent: **08.12.2021**
(21) Application number: 18869735.3
(22) Date of filing: 22.10.2018
(51) Int. Cl.: H04L 12/911, H04W 88/04, H04L 12/851

(54) **TRAFFIC PROCESSING METHOD AND USER PLANE APPARATUS**
VERFAHREN ZUR VERKEHRSVERARBEITUNG UND VORRICHTUNG AUF BENUTZEREBENE
PROCÉDÉ DE TRAITEMENT DE TRAFIC ET APPAREIL DE PLAN UTILISATEUR

(30) Priority: 23.10.2017 CN 201710993953
(43) Date of publication of application: 05.08.2020
(73) Proprietor: Huawei Technologies Co., Ltd., Longgang District Shenzhen, Guangdong 518129 (CN)
(72) Inventor: NIE, Shengxian, Shenzhen Guangdong 518129 (CN); XIN, Yang, Shenzhen Guangdong 518129 (CN); WU, Xiaobo, Shenzhen Guangdong 518129 (CN); CHONG, Weiwei, Shenzhen Guangdong 518129 (CN)
(74) Representative: Thun, Clemens
(86) International application number: PCT/CN2018/111222
(87) International publication number: WO 2019/080799

(56) References cited:
- CN-A- 101 951 551
- CN-A- 105 978 826
- US-A1- 2017 034 857
- US-A1- 2017 034 857
- US-A1- 2017 034 860
- US-A1- 2017 163 601
- Anonymous: "Unified Access Gateway Series Application Guide: The All-in-one Guest Access Solution of Tomorrow, Delivered Today", , 31 December 2014 (2014-12-31), pages 1-6, XP055722635, Retrieved from the Internet: URL:https://www.zyxel.com/objects/e-Brochu res/Application-Guide/Unified-Access-Gatew ay-Series.pdf [retrieved on 2020-08-14]

## Description

### TECHNICAL FIELD

Embodiments of this application relate to the field of communications technologies, and in particular, to a traffic processing and a user plane apparatus.

### BACKGROUND

In a scenario in which traffic is provided and used on a mobile terminal, for example, a wireless-fidelity (Wireless-Fidelity, Wi-Fi) hotspot is enabled in a mobile phone, other user equipment (such as a mobile phone or a tablet computer) can perform access through the Wi-Fi hotspot. In this process, the users cannot learn whether services accessed by the users are implemented through a 3rd generation partnership project (3rd Generation Partnership Project, 3GPP) network or a non-3GPP network. For the users, the Wi-Fi hotspot is consistent with common wireless local area networks (Wireless Local Area Networks, WLAN) (namely, one of non-3GPP access manners). The users may possibly use a traffic-intensive service, such as an online video service, a virtual reality (Virtual Reality, VR) service, or an augmented reality (Augmented Reality, AR) service. In addition, even if the users can learn of the Wi-Fi hotspot access, behaviors of the users are still uncontrollable for a user who enables the Wi-Fi hotspot.

Based on the foregoing scenario of the prior art, if the users use the traffic-intensive service, economic loss may be caused to the party who enables the Wi-Fi hotspot. In the prior art, to resolve a problem of the uncontrollable Wi-Fi hotspot, some solutions of parameter settings are provided on a terminal side when the Wi-Fi hotspot is enabled. For example, the following solutions are provided in the prior art:
(1) Setting a password: It is restricted that only user equipment obtaining the password can be allowed to perform access.
(2) Setting a maximum quantity of connected persons: After the quantity of persons is reached, other user equipment cannot perform access.
(3) Setting a traffic threshold: a maximum value of traffic allowed to be consumed in a single-time enabled state of the Wi-Fi hotspot. When the threshold is reached, the party enabling the Wi-Fi hotspot automatically disables the Wi-Fi hotspot.
(4) Setting a holding time of the Wi-Fi hotspot: The Wi-Fi hotspot is automatically disabled if there is not connection in a period of time.

US 2017/0163601 A1 refers to systems and methods for a mobile hotspot that can be managed by an access controller. A WAN connection is established by a mobile hotspot through a telecommunication data network via a wireless WAN module. When in a first mode, the mobile hotspot: (i) sets up a secure tunnel through the WAN connection with an AC of the enterprise that manages APs of a wireless network of an enterprise; (ii) broadcasts an SSID that is also broadcast by the APs; (iii) establishes a WLAN connection with a WiFi-enabled device based on an AP profile containing (a) authentication information regarding users approved to access the wireless network and (b) information identifying the SSID; (iv) receives WLAN traffic from the WiFi-enabled device through the WLAN connection; and (v) transmits the WLAN traffic to a server of the enterprise via the secure tunnel and the AC.

The document "The All-in-one Guest Access Solution of Tomorrow, Delivered Tody", ZyXel, refers to an application guide for access solutions.

Further, US 2017/0034857 A1 refers to an access point node comprising a first interface configured to communicate with a radio access node of a cellular network via a radio link and further comprises a second interface configured to communicate with a terminal via a further radio link. The access point node is configured to establish an end-to-end connection with a user-plane gateway node of the cellular network in response to receiving an attach message from the terminal.

In the foregoing solutions, the party enabling the hotspot can set parameters of the Wi-Fi hotspot, thereby controlling traffic consumption in direct manners and preventing economic loss brought by abnormal traffic consumption.

However, such manners based on terminal parameter settings cannot truly resolve the problem of abnormal traffic. For example, although the manner of setting the password blocks access of untrusted user equipment, and the manner of setting the maximum quantity of connected persons also prevents access of more user equipments, a user that already performs access can still use the traffic-intensive service without notifying the party enabling the hotspot. The manner of the traffic threshold can prevent traffic from exceeding the threshold, but an alarm is sent only after massive traffic has been consumed, and economic loss of the party enabling the hotspot is still caused.

### SUMMARY

Aspects of this application provide a traffic processing method, a user plane apparatus, and a terminal device, used to accurately identify abnormal traffic and improve traffic management effects. This problem is solved by the subject matter of the independent claims. Therefore, the present invention is defined by the independent claims. Further implementation forms are provided in the dependent claims.

To resolve the foregoing technical problem, the following technical solutions are provided in this application:
According to a first aspect, this application provides a traffic processing method, including: receiving, by a user plane function network element, hotspot indication information from a terminal device, where the hotspot indication information includes that a hotspot switch is enabled; obtaining, by the user plane function network element, a characteristic parameter of a first data packet, and sending the characteristic parameter of the first data packet to a data analytics network element, where the first data packet is data obtained by the user plane function network element in a period in which the hotspot switch of the terminal device is enabled; and determining, by the user plane function network element, that traffic corresponding to the first data packet is abnormal traffic.

In this aspect of this application, the user plane function network element determines, based on the hotspot indication information from the terminal device, that the hotspot switch of the terminal device is enabled. The user plane function network element obtains the first data packet in the period in which the hotspot switch of the terminal device is enabled, and sends the characteristic parameter of the first data packet to the data analytics network element. The user plane function network element determines that traffic corresponding to the first data packet is abnormal traffic. In this embodiment of this application, without relying on user end settings of a party enabling the hotspot, the user plane function network element may determine whether the traffic corresponding to the first data packet obtained in the period in which the hotspot of the terminal device is enabled is abnormal traffic, thereby accurately identifying the abnormal traffic and improving traffic management effects.

In a possible design of the first aspect of this application, after the determining, by the user plane function network element, that traffic corresponding to the first data packet is abnormal traffic, the method further includes: sending, by the user plane function network element, a traffic abnormality notification to the terminal device, where the traffic abnormality notification is used to notify that the traffic corresponding to the first data packet is the abnormal traffic. Therefore, the terminal device may obtain the traffic abnormality notification, and may determine, based on the traffic abnormality notification, that the traffic corresponding to the first data packet is abnormal traffic, so that the terminal device can identify data packets corresponding to abnormal traffic.

In a possible design of the first aspect of this application, the sending, by the user plane function network element, a traffic abnormality notification to the terminal device includes: adding, by the user plane function network element, the traffic abnormality notification to a data message. The user plane function network element may send the traffic abnormality notification to the terminal device by using the data message. A specific frame format of the data message is not limited.

In a possible design of the first aspect of this application, the determining, by the user plane function network element, that traffic corresponding to the first data packet is abnormal traffic includes: receiving, by the user plane function network element, a traffic abnormality notification from the data analytics network element or a control plane network element. Therefore, the user plane function network element, through parsing the traffic abnormality notification, can determine the data packets corresponding to abnormal traffic.

In a possible design of the first aspect of this application, the determining, by the user plane function network element, that traffic corresponding to the first data packet is abnormal traffic includes: receiving, by the user plane function network element, a service type that is from the data analytics network element or the terminal device and that the terminal device allows or does not allow to be used in a period in which the hotspot switch is enabled; receiving, by the user plane function network element, a service type that is from the data analytics network element or the terminal device and that is of the first data packet; and determining, by the user plane function network element based on the service type that the terminal device allows or does not allow to be used in the period in which the hotspot switch is enabled, that the traffic corresponding to the first data packet is the abnormal traffic. Therefore, the user plane function network element can match the service type of the first data packet by using the service type that the terminal device allows or does not allow to be used in the period in which the hotspot switch is enabled, and can autonomously identify whether the traffic corresponding the first data packet is abnormal traffic.

In a possible design of the first aspect of this application, after the determining, by the user plane function network element, that traffic corresponding to the first data packet is abnormal traffic, the method further includes: stopping, by the user plane function network element, sending a data packet corresponding to the abnormal traffic, and buffering the data packet corresponding to the abnormal traffic. The user plane function network element stops sending the data packet corresponding to the abnormal traffic, thereby reducing traffic loss of the party enabling the hotspot.

In a possible design of the first aspect of this application, the method further includes: receiving, by the user plane function network element, a traffic abnormality answer from the terminal device, where the traffic abnormality answer includes that: there is traffic abnormality or there is no traffic abnormality; and when the user plane function network element determines, based on the traffic abnormality answer, that the traffic corresponding to the first data packet is the abnormal traffic, discarding the data packet that corresponds to the abnormal traffic and is buffered by the user plane function network element; or when the user plane function network element determines, based on the traffic abnormality answer, that the traffic corresponding to the first data packet is not the abnormal traffic, sending the data packet that corresponds to the abnormal traffic and is buffered by the user plane function network element to the terminal device. When the traffic abnormality answer determines that the traffic corresponding to the first data packet is not abnormal traffic, the user plane function network element sends the buffered data packet corresponding to the abnormal traffic, so that the party enabling the hotspot can provide traffic for the party using the hotspot.

In a possible design of the first aspect of this application, the method further includes: receiving, by the user plane function network element, the traffic abnormality answer from the terminal device, where the traffic abnormality answer includes that: there is traffic abnormality or there is no traffic abnormality; and sending, by the user plane function network element, the traffic abnormality answer to the data analytics network element. The data analytics network element can update, based on the traffic abnormality answer, information about the service type that the terminal device allows to be used when the Wi-Fi hotspot is enabled, so that during online detection, it can be more accurately identified whether the data packet is abnormal traffic.

According to a second aspect, this application further provides a user plane apparatus, including: a receiving module, configured to receive hotspot indication information from a terminal device, where the hotspot indication information includes that a hotspot switch is enabled; an obtaining module, configured to: obtain a characteristic parameter of a first data packet, and send the characteristic parameter of the first data packet to a data analytics network element, where the first data packet is data obtained by the user plane apparatus in a period in which the hotspot switch of the terminal device is enabled; and a determining module, configured to determine that traffic corresponding to the first data packet is abnormal traffic.

In a possible design of the second aspect of this application, the user plane apparatus further includes a sending module. The sending module is configured to: after the determining module determines that the traffic corresponding to the first data packet is the abnormal traffic, send a traffic abnormality notification to the terminal device, where the traffic abnormality notification is used to notify that the traffic corresponding to the first data packet is the abnormal traffic.

In a possible design of the second aspect of this application, the sending module is specifically configured to add the traffic abnormality notification to a data message.

In a possible design of the second aspect of this application, the determining module is specifically configured to receive the traffic abnormality notification from the data analytics network element or a control plane network element.

In a possible design of the second aspect of this application, the determining module includes: a receiving submodule, configured to: receive a service type that is from the data analytics network element or the terminal device and that the terminal device allows or does not allow to be used in a period in which the hotspot switch is enabled, and receive a service type that is from the data analytics network element or the terminal device and that is of the first data packet; and an abnormal traffic determining submodule, configured to determine, based on the service type that the terminal device allows or does not allow to be used in the period in which the hotspot switch is enabled, that the traffic corresponding to the first data packet is the abnormal traffic.

In a possible design of the second aspect of this application, the user plane apparatus further includes a traffic buffering module, configured to: after the determining module determines that the traffic corresponding to the first data packet is the abnormal traffic, stop sending a data packet corresponding to the abnormal traffic and buffer the data packet corresponding to the abnormal traffic.

In a possible design of the second aspect of this application, the user plane apparatus further includes a traffic processing module, where the receiving module is further configured to receive a traffic abnormality answer from the terminal device, where the traffic abnormality answer includes that: there is traffic abnormality or there is no traffic abnormality; and the traffic processing module is configured to: when it is determined, based on the traffic abnormality answer, that the traffic corresponding to the first data packet is the abnormal traffic, discard the data packet that corresponds to the abnormal traffic and is buffered by the user plane apparatus; or when it is determined, based on the traffic abnormality answer, that the traffic corresponding to the first data packet is not the abnormal traffic, send the data packet that corresponds to the abnormal traffic and is buffered by the user plane apparatus.

In a possible design of the second aspect of this application, the user plane apparatus further includes the sending module, where the receiving module is further configured to receive the traffic abnormality answer from the terminal device, where the traffic abnormality answer includes that: there is traffic abnormality or there is no traffic abnormality; and the sending module is configured to send the traffic abnormality answer to the data analytics network element.

In the second aspect of this embodiment of this application, constituent modules of the user plane apparatus may further perform the steps described in the first aspect and the various possible implementations. For details, refer to the foregoing descriptions in the first aspect and the various possible implementations.

According to a third aspect, this application provides a traffic processing method, including: sending, by a terminal device, hotspot indication information to a core network network element, where the hotspot indication information includes that a hotspot switch of the terminal device is enabled; and obtaining, by the terminal device, a traffic abnormality notification from the core network network element based on the hotspot indication information. In this embodiment of this application, the terminal device needs to send the hotspot indication information to the core network network element, to receive the traffic abnormality notification from the core network network element, so that the terminal device can determine data packets corresponding to abnormal traffic.

In a possible design of the third aspect, the method further includes: sending, by the terminal device, to the core network network element, a service type that the terminal device allows or does not allow to be used in the period in which the hotspot switch is enabled. Specifically, the terminal device, when performing reporting to the core network network element, may add, when sending first-time Wi-Fi hotspot (hotspot) information to the core network network element, the service type that the terminal does not allow or allows to be used in the period in which the Wi-Fi hotspot is enabled.

In a possible design of the third aspect, after the obtaining, by the terminal device, a traffic abnormality notification from the core network network element based on the hotspot indication information, the method further includes: sending, by the terminal device, a traffic abnormality answer to the core network network element, where the traffic abnormality answer includes: there is traffic abnormality or there is no traffic abnormality. A user may use the terminal device to confirm with the core network network element whether there is traffic abnormality, so that the core network network element can perform subsequent traffic management by using the traffic abnormality answer.

In a possible design of the third aspect, after the obtaining, by the terminal device, a traffic abnormality notification from the core network network element based on the hotspot indication information, the method further includes: disabling, by the terminal device based on the traffic abnormality notification, a hotspot of the terminal device; or disabling, by the terminal device, a connection that is of a hotspot user and that generates abnormal traffic; or prohibiting, by the terminal device, a service type generating abnormal traffic from using the hotspot of the terminal device.

In a possible design of the third aspect, the core network network element includes at least one of: a control plane function network element, a user plane function network element, a policy network element, and a data analytics network element.

According to a fourth aspect, this application further provides a traffic processing method. The method includes: obtaining, by a data analytics network element, a service type that a terminal device allows or does not allow to be used in a period in which a wireless fidelity hotspot switch is enabled; receiving, by the data analytics network element, a characteristic parameter of a first data packet from a user plane function network element, where the first data packet is a data packet obtained by the user plane function network element in the period in which the hotspot switch of the terminal device is enabled; determining, by the data analytics network element, a service type of the first data packet based on the characteristic parameter of the first data packet; and determining, by the data analytics network element based on the service type that the terminal device allows or does not allow to be used in the period in which the hotspot switch is enabled, that traffic corresponding to the first data packet is abnormal traffic. In this embodiment of this application, without relying on user end settings of a party enabling the hotspot, the data analytics network element may determine whether the traffic corresponding to the first data packet obtained in the period in which the hotspot switch of the terminal device is enabled is abnormal traffic, thereby accurately identifying the abnormal traffic and improving traffic management effects.

In a possible design of the fourth aspect, after the determining that traffic corresponding to the first data packet is abnormal traffic, the method further includes: sending, by the data analytics network element, a traffic abnormality notification to a control plane function network element or the user plane function network element, where the traffic abnormality notification is used to notify that the traffic corresponding to the first data packet is abnormal traffic.

In a possible design of the fourth aspect, the obtaining, by a data analytics network element, a service type that a terminal device allows or does not allow to be used in a period in which a wireless fidelity hotspot switch is enabled includes: determining, by the data analytics network element based on training data, the service type that the terminal device allows or does not allow to be used in the period in which the hotspot switch is enabled; or receiving, by the data analytics network element, the service type that is from the terminal device and that the terminal device allows or does not allow to be used in the period in which the hotspot switch is enabled.

In a possible design of the fourth aspect, the method further includes: receiving, by the data analytics network element, a traffic abnormality answer from the terminal device, where the traffic abnormality answer includes that: there is traffic abnormality or there is no traffic abnormality; and updating, by the data analytics network element based on the traffic abnormality answer, the service type that the terminal device allows or does not allow to be used in the period in which the hotspot switch is enabled.

According to a fifth aspect, this application further provides a traffic processing method. The method includes: obtaining, by a data analytics network element, a service type that a terminal device allows or does not allow to be used in a period in which a wireless fidelity hotspot switch is enabled; sending, by the data analytics network element, the service type that the terminal device allows to be used in the period in which the hotspot switch is enabled to a user plane function network element or a control plane function network element; receiving, by the data analytics network element, a characteristic parameter of a first data packet from the user plane function network element, where the first data packet is data obtained by the user plane function network element in the period in which the hotspot switch of the terminal device is enabled; determining, by the data analytics network element, a service type of the first data packet based on the characteristic parameter of the first data packet; and sending, by the data analytics network element, the service type of the first data packet to the user plane function network element or the control plane function network element.

In a possible design of the fifth aspect, the obtaining, by a data analytics network element, a service type that a terminal device allows or does not allow to be used in a period in which a wireless fidelity hotspot switch is enabled includes: determining, by the data analytics network element based on training data, the service type that the terminal device allows or does not allow to be used in the period in which the hotspot switch is enabled.

According to a sixth aspect, of this application provides a traffic processing method. The method includes: receiving, by a control plane function network element, hotspot indication information from a terminal device, where the hotspot indication information includes that a hotspot switch is enabled; receiving, by the control plane function network element, a characteristic parameter of a first data packet from a user plane function network element, and sending the characteristic parameter of the first data packet to a data analytics network element, where the first data packet is data obtained by the user plane function network element in a period in which the hotspot switch of the terminal device is enabled; and determining, by the control plane function network element, that traffic corresponding to the first data packet is abnormal traffic. In this embodiment of this application, without relying on user end settings of a party enabling the hotspot, the control plane function network element may determine whether the traffic corresponding to the first data packet obtained in the period in which the hotspot of the terminal device is enabled is abnormal traffic, thereby accurately identifying the abnormal traffic and improving traffic management effects.

In a possible design of the sixth aspect, after the determining, by the control plane function network element, that traffic corresponding to the first data packet is abnormal traffic, the method further includes: sending, by the control plane function network element, a traffic abnormality notification to the terminal device, where the traffic abnormality notification is used to notify that the traffic corresponding to the first data packet is the abnormal traffic.

In a possible design of the sixth aspect, the sending, by the control plane function network element, a traffic abnormality notification to the terminal device includes: adding, by the control plane function network element, the traffic abnormality notification to control signaling. Specifically, the control signaling may use but is not limited to using two procedure messages in the following examples. One is a Service Request procedure initiated by a network side, and the traffic abnormality notification is carried in a Paging message for transmission to UE; and the other one is a PDU Session Modification procedure initiated by the network side, and the traffic abnormality notification is carried in a PDU Session Modification Accept message for transmission to the UE.

In a possible design of the sixth aspect, the determining, by the control plane function network element, that traffic corresponding to the first data packet is abnormal traffic includes: receiving, by the control plane function network element, the traffic abnormality notification from the data analytics network element or the user plane function network element.

In a possible design of the sixth aspect, the determining, by the control plane function network element, that traffic corresponding to the first data packet is abnormal traffic includes: receiving, by the control plane function network element, a service type that is from the data analytics network element or the terminal device and that the terminal device allows or does not allow to be used in the period in which the hotspot switch is enabled; receiving, by the control plane function network element, a service type that is from the data analytics network element or the terminal device and that is of the first data packet; and determining, by the control plane function network element based on the service type that the terminal device allows or does not allow to be used in the period in which the hotspot switch is enabled, that the traffic corresponding to the first data packet is the abnormal traffic.

In a possible design of the sixth aspect, the determining, by the control plane function network element, that traffic corresponding to the first data packet is abnormal traffic includes: receiving, by the control plane function network element, a service type that is from the terminal device and that the terminal device allows or does not allow to be used in the period in which the hotspot switch is enabled; receiving, by the control plane function network element, a service type that is from the data analytics network element or the terminal device and that is of the first data packet; and determining, by the control plane function network element based on the service type that the terminal device allows or does not allow to be used in the period in which the hotspot switch is enabled, that the traffic corresponding to the first data packet is the abnormal traffic.

In a possible design of the sixth aspect, after the determining, by the control plane function network element, that traffic corresponding to the first data packet is abnormal traffic, the method further includes: instructing, by the control plane function network element, the user plane function network element to stop sending the traffic corresponding to the first data packet, and to buffer the traffic corresponding to the first data packet.

In a possible design of the sixth aspect, the method further includes: receiving, by the control plane function network element, a traffic abnormality answer from the terminal device, where the traffic abnormality answer includes that: there is traffic abnormality or there is no traffic abnormality; and when the control plane function network element determines, based on the traffic abnormality answer, that the traffic corresponding to the first data packet is abnormal traffic, instructing, by the control plane function network element, the user plane function network element to discard the buffered data packet corresponding to the abnormal traffic; or when the control plane function network element determines, based on the traffic abnormality answer, that the traffic corresponding to the first data packet is not abnormal traffic, instructing, by the control plane function network element, the user plane function network element to forward the buffered data packet corresponding to the abnormal traffic.

In a possible design of the sixth aspect, the method further includes: receiving, by the control plane function network element, a traffic abnormality answer from the terminal device, where the traffic abnormality answer includes that: there is traffic abnormality or there is no traffic abnormality; and forwarding, by the control plane function network element, the traffic abnormality answer to the data analytics network element.

According to a seventh aspect, this application provides a communications apparatus. The communications apparatus may include an entity such as a chip. The communications apparatus includes: a processor and a memory. The memory is configured to store an instruction; and the processor is configured to execute the instruction in the memory, to enable the communications apparatus to perform the method according to any one of the first aspect to the sixth aspect.

According to an eighth aspect, a terminal device includes: a sending module, configured to send hotspot indication information to a core network network element, where the hotspot indication information includes that a hotspot switch is enabled; and an obtaining module, configured to obtain a traffic abnormality notification from the core network network element based on the hotspot indication information.

In a possible design of the eighth aspect, the sending module is further configured to send, to the core network network element, a service type that the terminal device allows or does not allow to be used in a period in which the hotspot switch is enabled. Specifically, the terminal device, when performing reporting to the core network network element, may add, when sending first-time Wi-Fi hotspot (hotspot) information to the core network network element, the service type that the terminal does not allow or allows to be used in the period in which the Wi-Fi hotspot is enabled.

In a possible design of the eighth aspect, the sending module is further configured to: after the obtaining module obtains the traffic abnormality notification from the core network network element based on the hotspot indication information, send a traffic abnormality answer to the core network network element, where the traffic abnormality answer includes that: there is traffic abnormality or there is no traffic abnormality.

In a possible design of the eighth aspect, the terminal device further includes an abnormality processing module, configured to: after the obtaining module obtains the traffic abnormality notification from the core network network element based on the hotspot indication information, disable a hotspot based on the traffic abnormality notification; or disable a connection that is of a hotspot user and that generates abnormal traffic; or prohibit a service type generating abnormal traffic from using the hotspot.

In a possible design of the eighth aspect, the core network network element includes at least one of: a control plane function network element, a user plane function network element, a policy network element, and a data analytics network element.

According to a ninth aspect, application further provides a data analytics network element. The data analytics network element includes: an obtaining module, configured to obtain a service type that a terminal device allows or does not allow to be used in a period in which a wireless fidelity hotspot switch is enabled; a receiving module, configured to receive a characteristic parameter of a first data packet from a user plane function network element, where the first data packet is a data packet obtained by the user plane function network element in the period in which the hotspot switch of the terminal device is enabled; a service type determining module, configured to determine, based on the characteristic parameter of the first data packet, a service type of the first data packet; and an abnormal traffic determining module, configured to determine, based on the service type that the terminal device allows or does not allow to be used in the period in which the hotspot switch is enabled, that traffic corresponding to the first data packet is abnormal traffic.

In a possible design of the ninth aspect, the data analytics network element further includes: a sending module, configured to send, after the abnormal traffic determining module determines that the traffic corresponding to the first data packet is the abnormal traffic, a traffic abnormality notification to a control plane function network element or the user plane function network element, where the traffic abnormality notification is used to notify that the traffic corresponding to the first data packet is the abnormal traffic.

In a possible design of the ninth aspect, the obtaining module is specifically configured to: obtain, based on training data, the service type that the terminal device allows or does not allow to be used in the period in which the hotspot switch is enabled; or receive the service type that the terminal device allows or does not allow to be used in the period in which the hotspot switch is enabled and that is from the terminal device.

In a possible design of the ninth aspect, the receiving module is further configured to: receive a traffic abnormality answer from the terminal device, where the traffic abnormality answer includes that: there is traffic abnormality or there is no traffic abnormality; and the data analytics network element updates, based on the traffic abnormality answer, the service type that the terminal device allows or does not allow to be used in the period in which the hotspot switch is enabled.

According to a tenth aspect, this application further provides a data analytics network element, including: an obtaining module, configured to obtain a service type that a terminal device allows or does not allow to be used in a period in which a wireless fidelity hotspot switch is enabled; a sending module, configured to send, to a user plane function network element or a control plane function network element, the service type that the terminal device allows to be used in the period in which the hotspot switch is enabled; a receiving module, configured to receive a characteristic parameter of a first data packet from the user plane function network element, where the first data packet is data obtained by the user plane function network element in the period in which the hotspot switch of the terminal device is enabled; a service type determining module, configured to determine, based on the characteristic parameter of the first data packet, a service type of the first data packet; and the sending module, further configured to send the service type of the first data packet to the user plane function network element or the control plane function network element.

In a possible design of the tenth aspect, the obtaining module is specifically configured to obtain, based on training data, the service type that the terminal device allows or does not allow to be used in the period in which the hotspot switch is enabled.

According to an eleventh aspect, this application provides a control plane function network element, including: a receiving module, configured to receive hotspot indication information from a terminal device, where the hotspot indication information includes that a hotspot switch is enabled; the receiving module, further configured to receive a characteristic parameter of a first data packet from a user plane function network element; a sending module, configured to send the characteristic parameter of the first data packet to a data analytics network element, where the first data packet is data obtained by the user plane function network element in a period in which the hotspot switch of the terminal device is enabled; and an abnormal traffic determining module, configured to determine that traffic corresponding to the first data packet is abnormal traffic.

In a possible design of the eleventh aspect, the sending module is further configured to: after the abnormal traffic determining module determines that the traffic corresponding to the first data packet is abnormal traffic, send a traffic abnormality notification to the terminal device, where the traffic abnormality notification is used to notify that the traffic corresponding to the first data packet is the abnormal traffic.

In a possible design of the eleventh aspect, the sending module is specifically configured to add the traffic abnormality notification to control signaling. Specifically, the control signaling may use but is not limited to using two procedure messages in the following examples. One is a Service Request procedure initiated by a network side, and the traffic abnormality notification is carried in a Paging message for transmission to UE; and the other one is a PDU Session Modification procedure initiated by the network side, and the traffic abnormality notification is carried in a PDU Session Modification Accept message for transmission to the UE.

In a possible design of the eleventh aspect, the abnormal traffic determining module is specifically configured to receive the traffic abnormality notification from the data analytics network element or the user plane function network element.

In a possible design of the eleventh aspect, the abnormal traffic determining module is specifically configured to: receive a service type that is from the data analytics network element or the terminal device and that the terminal device allows or does not allow to be used in the period in which the hotspot switch is enabled; receive a service type that is from the data analytics network element or the terminal device and that is of the first data packet; and determine, based on the service type that the terminal device allows or does not allow to be used in the period in which the hotspot switch is enabled, that the traffic corresponding to the first data packet is abnormal traffic.

In a possible design of the eleventh aspect, the abnormal traffic determining module is specifically configured to: receive the service type that the terminal device allows or does not allow to be used in the period in which the hotspot switch is enabled and that is from the terminal device; receive the service type that is from the data analytics network element or the terminal device and that is of the first data packet; and determine, based on the service type that the terminal device allows or does not allow to be used in the period in which the hotspot switch is enabled, that the traffic corresponding to the first data packet is abnormal traffic.

In a possible design of the eleventh aspect, the sending module is further configured to: after the abnormal traffic determining module determines that the traffic corresponding to the first data packet is abnormal traffic, instruct the user plane function network element to stop sending the traffic corresponding to the first data packet, and to buffer the traffic corresponding to the first data packet.

In a possible design of the eleventh aspect, the receiving module is further configured to receive a traffic abnormality answer from the terminal device, where the traffic abnormality answer includes that: there is traffic abnormality or there is no traffic abnormality; and the sending module is further configured to: when it is determined, based on the traffic abnormality answer, that the traffic corresponding to the first data packet is abnormal traffic, instruct the user plane function network element to discard the buffered data packet corresponding to the abnormal traffic; or when it is determined, based on the traffic abnormality answer, that the traffic corresponding to the first data packet is not abnormal traffic, instruct the user plane function network element to forward the buffered data packet corresponding to the abnormal traffic.

In a possible design of the eleventh aspect, the receiving module is further configured to receive a traffic abnormality answer from the terminal device, where the traffic abnormality answer includes that: there is traffic abnormality or there is no traffic abnormality; and the control plane function network element forwards the traffic abnormality answer to the data analytics network element.

According to a twelfth aspect, this application provides a terminal device, and the terminal device may include an entity such as a chip. The terminal device includes: a processor and a memory, where the memory is configured to store an instruction; and the processor is configured to execute the instruction in the memory, to enable the terminal device to perform the method according to any one in the foregoing third aspect.

According to a thirteenth aspect, this application provides a chip system. The chip system includes a processor, configured to support a network device in implementing a function in the foregoing aspect, for example, sending or processing data and/or information in the foregoing method. In a possible design, the chip system further includes a memory. The memory is configured to store a program instruction and data that are necessary to the network device. The chip system may include a chip, or may include a chip and another discrete device.

According to fourteenth aspect, this application provides a computer-readable storage medium. The computer-readable storage medium stores an instruction, and when run on a computer, the instruction enables the computer to perform the methods according to the foregoing aspects.

According to a fifteenth aspect, this application provides a computer program product including an instruction, and when run on a computer, the computer program product enables the computer to perform the methods according to the foregoing aspects.

### BRIEF DESCRIPTION OF DRAWINGS

FIG. 1 is a schematic architectural diagram of a 5G system;
FIG. 2 is a schematic block flowchart of a traffic processing method according to an aspect of this application;
FIG. 3 is a schematic block flowchart of another traffic processing method according to an aspect of this application;
FIG. 4 is a schematic block flowchart of another traffic processing method according to an aspect of this application;
FIG. 5 is a schematic block flowchart of another traffic processing method according to an aspect of this application;
FIG. 6 is a schematic block flowchart of another traffic processing method according to an aspect of this application;
FIG. 7A and FIG. 7B are schematic flowcharts of interaction among a plurality of network elements in a scenario to which a traffic processing method provided in an aspect of this application is applied;
FIG. 8A, FIG. 8B, and FIG. 8C are schematic flowcharts of interaction among a plurality of network elements in a scenario to which a traffic processing method provided in an aspect of this application is applied;
FIG. 9 is a schematic flowchart of interaction among a plurality of network elements in a scenario to which a traffic processing method provided in an aspect of this application is applied;
FIG. 10-a is a schematic structural diagram of a user plane apparatus according to an aspect of this application;

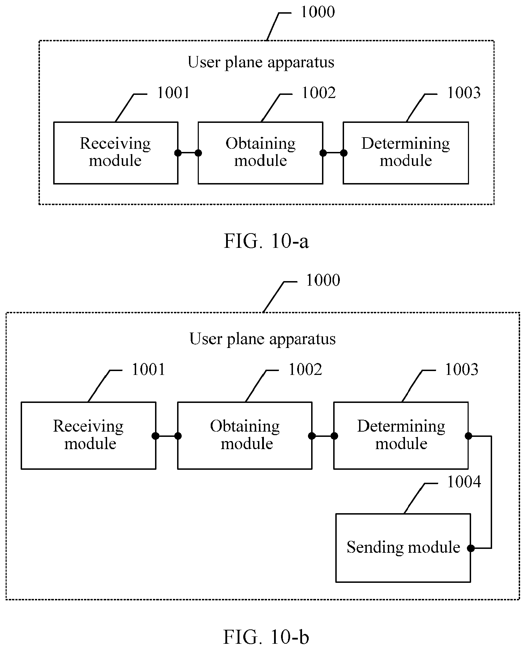

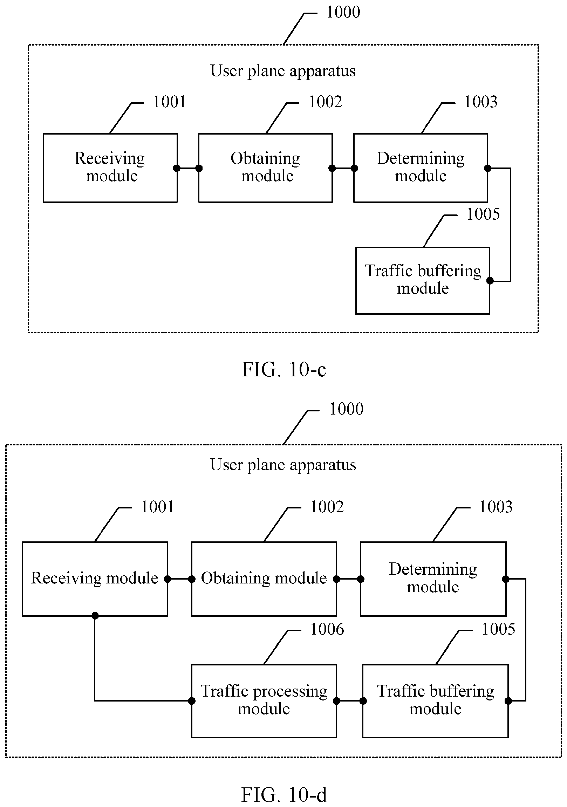

FIG. 10-b is a schematic structural diagram of another user plane apparatus according to an aspect of this application;
FIG. 10-c is a schematic structural diagram of another user plane apparatus according to an aspect of this application;
FIG. 10-d is a schematic structural diagram of another user plane apparatus according to an aspect of this application;

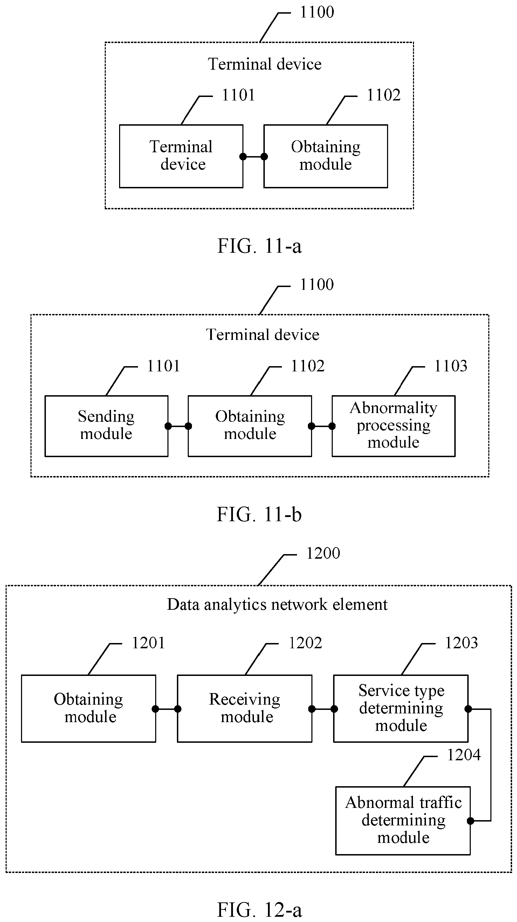

FIG. 11-a is a schematic structural diagram of a terminal device according to an aspect of this application;
FIG. 11-b is a schematic structural diagram of another terminal device according to an aspect of this application;

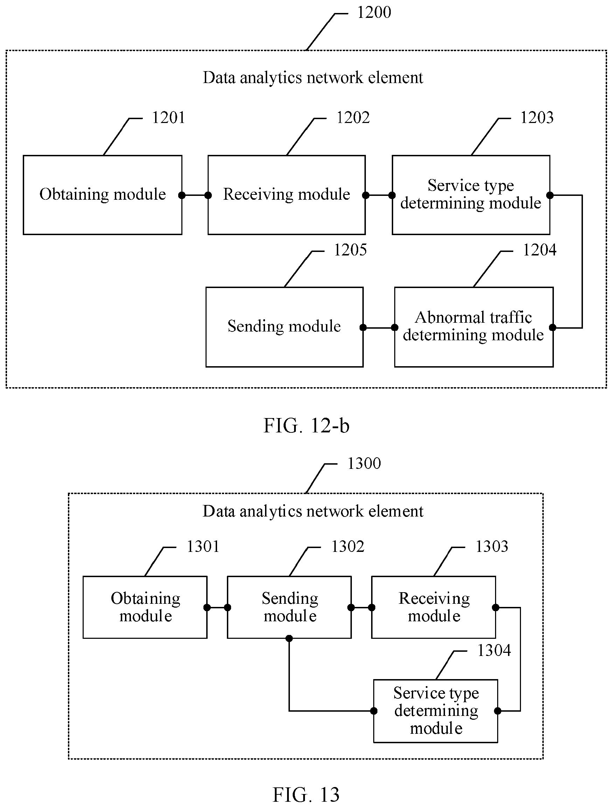

FIG. 12-a is a schematic structural diagram of a data analytics network element according to an aspect of this application;
FIG. 12-b is a schematic structural diagram of another data analytics network element according to an aspect of this application;
FIG. 13 is a schematic structural diagram of another data analytics network element according to an aspect of this application;

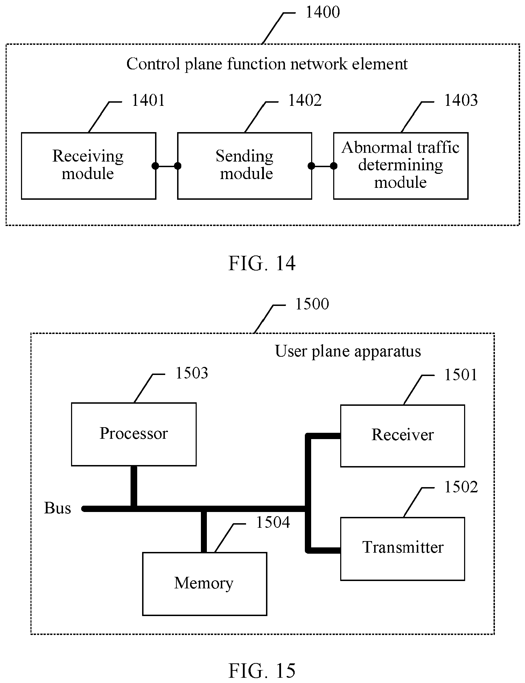

FIG. 14 is a schematic structural diagram of a control plane function network element according to an aspect of this application;
FIG. 15 is a schematic structural diagram of a user plane apparatus according to an aspect of this application;

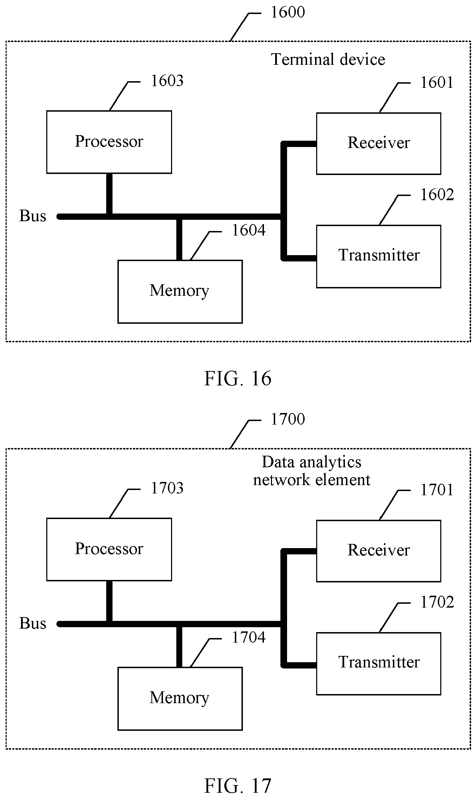

FIG. 16 is a schematic structural diagram of another terminal device according to an aspect of this application;
FIG. 17 is a schematic structural diagram of another data analytics network element according to an aspect of this application; and

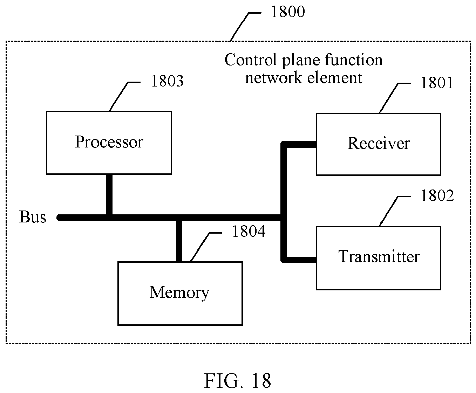

FIG. 18 is a schematic structural diagram of another control plane function network element according to an aspect of this application.

### DESCRIPTION OF EMBODIMENTS

The following describes embodiments of this application with reference to the accompanying drawings.

In the specification, claims, and accompanying drawings of the embodiment of this application, the terms "first", "second", and so on are intended to distinguish between similar objects but do not necessarily indicate a specific order or sequence. It should be understood that the terms used in such a way are interchangeable in proper circumstances, which is merely a determining manner that is used when objects having a same attribute are described in the embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The term "and/or" in the embodiments of this application describes only an association relationship between associated objects and represents that three relationships may exist. For example, A and/or B may represent the following cases: Only A exists, both A and B exist, and only B exists. In addition, in the descriptions of this application, "a plurality of" means two or more than two. In addition, in the embodiments of this application, "/" may mean a relationship of "and/or".

Details are separately described below.

The traffic processing method provided in the embodiments of this application may be applied to a third generation mobile communications (3-Generation, 3G) system, a fourth generation mobile communications (4-Generation, 4G) system, a fifth generation mobile communications (5th Generation, 5G) system, or a subsequent evolved communications system.

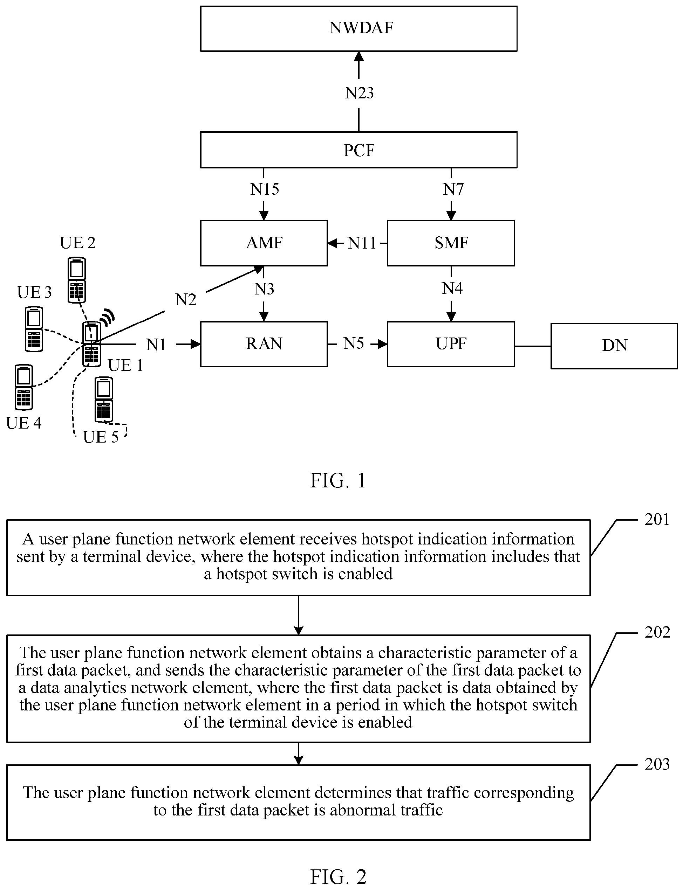

FIG. 1 is a schematic system architectural diagram of a 5G system to which a traffic processing method provided in an embodiment of this application is applied. An architecture of a 5G system is divided into two parts: an access network and a core network. The access network is used to implement a function related to radio access. The access network includes a radio access network (Radio Accessing Network, RAN). The core network may be divided in to a user plane and a control plane. The core network user plane includes a user plane function (User Plane Function, UPF) network element; and the core network control plane includes a core network access and mobility management function (Access and Mobility Management Function, AMF) network element, a session management function (Session Management Function, SMF) network element, a policy control function (Policy Control Function, PCF) network element, and a network data analytics function (Network Data Analytics Function, NWDAF) network element. The 5G system may further include: user equipment (User Equipment, UE) and a data network (Data Network, DN). In FIG. 1, the UPF network element is abbreviated to UPF, the NWDAF network element is abbreviated to NWDAF, and so on. Descriptions are not separately made again.

The AMF network element is mainly responsible for mobility management, such as user location update, registration of a user with a network, and user switching, in a mobile network.

The SMF network element is mainly responsible for session management in the mobile network. For example, specific functions of the SMF network element may include: allocating an Internet Protocol (Internet Protocol, IP) address to a user, selecting the UPF network element that provides a packet forwarding function, and the like. In the embodiments of this application, the SMF manages data transmission of the UPF, and is responsible for sending information between the NWDAF and the UPF, including a feature vector, a traffic abnormality result, a data type, and the like. In addition, the SMF can complete signaling interaction with the UE, to obtain a hotspot state, for example, to obtain a wireless fidelity Wi-Fi hotspot state, thereby alarming the UE of traffic abnormality.

The RAN refers to a base station. The UE accesses a network through the base station.

The UPF network element is mainly responsible for performing traffic processing, such as forwarding and charging, on a message of a user, and is used to transmit data in the network, including service data that is connected to the network by a hotspot user through a party enabling the hotspot and that is transmitted by the hotspot user.

The PCF network element is responsible for providing policies, such as a quality of service (Quality of Service, QoS) policy and a slice selection policy, to the AMF network element and the SMF network element. The PCF network element is directly connected to the AMF, the SMF, and the NWDAF. The PCF may determine a service processing policy based on an analysis result of the NWDAF. For example, the PCF determines whether an alarm is initiated by the SMF or the UPF, or whether the alarm is implemented in a manner of 3GPP network signaling or a manner of a data message.

The terminal device includes but is not limited to: user equipment (user equipment, UE), a subscriber unit, a subscriber station, a mobile station, a mobile, a remote station, a remote terminal device, a mobile terminal device, a user terminal device, a terminal device, a wireless communications device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, a processing device connected to a wireless modem, an in-vehicle device, a wearable device, a terminal device in an Internet of Things, a household appliance, a virtual reality device, a terminal device in a future 5G network, a terminal device in a future evolved public land mobile network (public land mobile network, PLMN), or the like. In the embodiments of this application, an example in which the terminal device is UE is used for description.

The UE establishes a packet data unit (Packet Data Unit, PDU) session (session) between the UE and the RAN, the RAN and the UPF network element, and the UPF network element and the DN, to access the data network. UE1 means user equipment 1 as a party enabling a hotspot. For example, the UE1 is a party enabling a Wi-Fi hotspot, and is connected to the base station through a radio interface. In the subsequent embodiments, an example in which the UE1 is the party enabling the Wi-Fi hotspot is used for description. UE2/3/4/5, as a hotspot user, accesses the hotspot of the UE1 in a WLAN manner. Traffic charges produced by traffic used by the UE2/3/4/5 in the network are all counted in a bill of the UE1.

The NWDAF network element is responsible for receiving a data feature in the network and performing training to obtain a data model; receiving a data feature reported in real time in the network, and obtaining a service type of current data based on the data model; and obtaining a data service type set allowed or not allowed to be used when the hotspot is enabled. Based on obtaining the data service type allowed or not allowed to be used when the hotspot is enabled, determining may be performed with reference to the service type of a real-time data packet. That is, it may be determined whether the current data is abnormal traffic. The NWDAF network element may further deliver information obtained by analysis to another network element (such as the PCF network element, the SMF network element, or the UPF network element), to instruct an operation of the PCF network element, the SMF network element, or the UPF network element.

The 5G system provided in the foregoing embodiment includes the control plane network element and the user plane network element. A4.5G system in which a control plane and a user plane are separated is similar to the 5G system. Using the 4.5G system as an example, a control plane network and a user plane of a PGW network element are separated into a PGW-C and a PGW-U. For example, the PGW-C can initiate a bearer modification with bearer QoS update procedure by using control plane signaling. In a 4.5G network, a control plane and a user plane of the SGW network element are separated into an SGW-C and an SGW-U. For example, the SGW-C can initiate the bearer modification with bearer QoS update procedure by using control plane signaling. In the 4.5G system, the PGW-C corresponds to the data control plane function network element, such as the SMF network element, in the 5G system, and the PGW-U corresponds to the data user plane function network element, such as the UPF network element, in the 5G system.

In some embodiments of this application, the control plane and the user plane in the 4G system architecture are not separated, and therefore, functions of the control plane and the user plane may be implemented in a same network element, such as the packet data gateway (Packet Data Network Gateway, PGW); or a mobility management entity (Mobility Management Entity, MME) corresponds to the control plane network element, and a serving gateway (Service Gateway, SGW) corresponds to the user plane network element. For example, in the 4G system, the control plane and the user plane are integrated in the PGW network element, and the PGW network element can be used to manage Wi-Fi hotspot traffic of the terminal device. For example, the PGW network element can send a traffic abnormality notification to the terminal device by using control plane signaling or user plane signaling. The control signaling may be a connection modification procedure or a bearer modification procedure of a packet data network (Packet Data Network, PDN). For example, the PGW network element initiates a bearer modification with bearer QoS update procedure.

In the embodiments of this application, an example in which the hotspot is specifically a Wi-Fi hotspot is used below. In a manner of setting a parameter for the terminal device (a party enabling the Wi-Fi hotspot), a manner of using of the Wi-Fi hotspot by other user equipment (a party using the Wi-Fi hotspot) is restricted, so that a problem that a traffic abnormality situation cannot be determined timely through a data service in a process of using the Wi-Fi hotspot is resolved. The network is notified of a current hotspot state, and performs real-time monitoring on the data service in the current state in a manner of big data analysis, so that abnormal traffic determining and alarming for the hotspot of terminal device are implemented. The method according to the embodiments of this application mainly includes the following process: For UE, the NWDAF network element obtains a service type that is allowed or not allowed to be used in a period in which the hotspot of the UE is enabled, for example, obtains a list including one or more service types. The service type may be a type identifier (such as a type A service or a type B service). The service type may alternatively be an application identifier. For example, the application identifier may include an APP id, a flow ID (flow id), or the like. Optionally, the service type list may be a list of applications (Application, APP) that the UE allows to be used only when WLAN is enabled. The service type list may include at least one service type.

The UE reports a hotspot state (enabled/disabled) of the UE to the network. For example, the UE reports the hotspot state to the SMF network element, the SMF network element reports (may indirectly report through a PC network element or directly report through a servitization interface) the hotspot state to the UPF network element and/or the NWDAF network element. During offline big data analysis, in a period in which the hotspot of the terminal device is enabled, the NWDAF network element may collect a feature of a data packet flowing through the UPF network element, and obtain an allowed service type list of each UE in the period in which the hotspot is enabled. During online real-time data packet monitoring, in the period in which the hotspot of the terminal device is enabled, the NWDAF network element monitors, in real time, the feature of the data packet flowing through the UPF network element, and obtains the data service type.

In the embodiments of this application, there are two different implementations to determine the abnormal traffic:
1) The NWDAF network element determines abnormal traffic, and sends an abnormal traffic indication to the SMF network element and/or the UPF network element. A determining condition may be specifically that a service type corresponding to the data feature is not in the allowed service type list. For an abnormal traffic behavior of the Wi-Fi hotspot, the SMF network element and the UPF network element may perform the following operation: The SMF network element or the UPF network element notifies the UE that there is the abnormal traffic behavior of the hotspot. The UE decides a next operation, and the current service continues. Alternatively, the UPF network element obtains detection information (such as IP quintuplets or a UE ID/IP) of the data packet, suspends delivering and buffers the data packet corresponding to the detection information, and stops charging; and in addition, the SMF network element or the UPF network element notifies the UE of the abnormal traffic behavior of the hotspot. If the UE acknowledges the abnormal traffic of the hotspot to the SMF network element and the UPF network element, the UE instructs the UPF network element to discard all data packets corresponding to the detection information (such as the IP quintuplets). Otherwise, the UPF network element continues forwarding the corresponding data packet.
2) The NWDAF network element sends the data service type obtained through analysis to the SMF network element and/or the UPF network element. The SMF network element or the UPF network element determines, based on the allowed/unallowed service type list when the hotspot is enabled obtained from the UE or the NWDAF network element, whether to initiate an alarm to the UE. For example, it may be determined, based on a service type list used only when the WLAN is enabled, whether to initiate the alarm to the UE.

Examples of traffic processing methods performed by different network elements are used for detailed descriptions below. First, an example from the perspective of the user plane function network element is used for description. The user plane function network element may also be referred to as a user plane apparatus. As shown in FIG. 2, a traffic processing method according to an embodiment in the embodiments of this application may include the following steps.

201. A user plane function network element receives hotspot indication information from a terminal device, where the hotspot indication information includes that a hotspot switch is enabled.

In this embodiment of this application, the terminal device is a party enabling the hotspot, for example, a party enabling a Wi-Fi hotspot. When a user enables the hotspot switch, the terminal device generates the hotspot indication information. The terminal device may send the hotspot indication information to the user plane function network element through a RAN. The user plane function network element obtains the hotspot indication information and determines that the hotspot switch of the terminal device is enabled.

For example, the terminal device may report a state of the hotspot switch to the user plane function network element through a PDU session establishment (PDU Session Establishment)/PDU session modification (PDU Session Modification)/registration (Registration)/service request (Service Request) procedure. Further, the terminal device may report, to the user plane function network element through the initiated PDU Session Establishment/PDU Session Modification/Registration/Service Request procedure, a service type (list) that the terminal device allows or does not allow to be used in a period in which the hotspot is enabled.

202. The user plane function network element obtains a characteristic parameter of a first data packet, and sends the characteristic parameter of the first data packet to a data analytics network element, where the first data packet is data obtained by the user plane function network element in the period in which the hotspot switch of the terminal device is enabled.

In this embodiment of this application, the user plane function network element obtains the data in the period in which the hotspot switch of the terminal device is enabled. Data transmission of the user plane function network element may be divided in to uplink transmission and downlink transmission. The uplink transmission may be sending, by the party using the hotspot by using the hotspot provided by the party enabling the hotspot, an uplink data packet to the user plane function network element, and sending, by the user plane function network element, the uplink data packet to a data network. The downlink transmission may be receiving, by the user plane function network element, a downlink data packet from the data network; sending, by the user plane function network element through the RAN, the downlink data packet to the party enabling the hotspot; and sending, by the party enabling the hotspot by using the hotspot, the downlink data packet to the party using the hotspot. The user plane function network element obtains the data packet in the period in which the hotspot switch of the terminal device is enabled. For example, the user plane function network element obtains a first data packet in the period in which the hotspot of the terminal device is enabled, where the first data packet may be an uplink transmitted data packet, or may be a downlink transmitted data packet. The user plane function network element may further obtain a characteristic parameter of the data packet, for example, may obtain a characteristic parameter of the first data packet. The characteristic parameter may include a parameter used to represent a service type of the data packet, such as IP quintuplets, a UE ID/IP, a message length, a filter, a flow identification, or some characteristic parameters obtained based on the data message. The characteristic parameter may include one or more parameters. For example, the characteristic parameter may be presented in a form of a feature vector. The user plane function network element may specifically obtain the characteristic parameter of the first data packet in a manner of feature engineering. The user plane function network element may further send the characteristic parameter of the first data packet to a data analytics network element. The data analytics network element may be specifically the NWDAF network element in the foregoing embodiment.

203. The user plane function network element determines that traffic corresponding to the first data packet is abnormal traffic.

In this embodiment of this application, after the user plane function network element sends the characteristic parameter of the first data packet to the data analytics network element, the user plane function network element determines that the traffic corresponding to the first data packet is abnormal traffic. There may be a plurality of implementations in which the user plane function network element determines that the traffic corresponding to the first data packet is abnormal traffic. Descriptions are made with examples below.

The "abnormal traffic" in this embodiment of this application includes data traffic not allowed in a current state of the terminal device, and whether the traffic is abnormal traffic may be different for each user. For example, a service type A is normal traffic for UE1, but may be abnormal traffic for UE2.

In some embodiments of this application, step 203 that the user plane function network element determines that the traffic corresponding to the first data packet is abnormal traffic includes:
receiving, by the user plane function network element, a traffic abnormality notification from the data analytics network element or a control plane network element.

The user plane function network element may receive the traffic abnormality notification from the data analytics network element or the control plane network element. The user plane function network element obtains the traffic abnormality notification, and may determine, based on the traffic abnormality notification, that the traffic corresponding to the first data packet is abnormal traffic. The data analytics network element may identify the service type of the first data packet by using the characteristic parameter of the first data packet, determine, based on the service type of the first data packet, whether the traffic corresponding to the first data packet is abnormal traffic, and generate the traffic abnormality notification if the traffic corresponding to the first data packet is abnormal traffic.

In some embodiments of this application, step 203 that the user plane function network element determines that the traffic corresponding to the first data packet is abnormal traffic includes:
receiving, by the user plane function network element, a service type that is from the data analytics network element or the terminal device and that the terminal device allows or does not allow to be used in the period in which the hotspot switch is enabled;
receiving, by the user plane function network element, the service type that is from the data analytics network element and that is of the first data packet; and
determining, by the user plane function network element based on the service type that the terminal device allows or does not allow to be used in the period in which the hotspot switch is enabled, that the traffic corresponding to the first data packet is abnormal traffic.

In the foregoing implementation scenario, the user plane function network element may obtain the service type that the terminal device allows to be used in the period in which the hotspot switch is enabled, or the user plane function network element may obtain the service type that the terminal device does not allow to be used in the period in which the hotspot switch is enabled. The service type allowed or not allowed to be used may be sent to the user plane function network element by the data analytics network element, or be sent to the user plane function network element by the terminal device. The data analytics network element may identify the service type of the first data packet by using the characteristic parameter of the first data packet, and send the service type of the first data packet to the user plane function network element. The user plane function network element may determine, by using the service type obtained in the foregoing steps, whether the traffic corresponding to the first data packet is abnormal traffic.

In some embodiments of this application, after step 203 that the user plane function network element determines that the traffic corresponding to the first data packet is abnormal traffic, the traffic processing method provided in this embodiment of this application may further include the following step:
sending, by the user plane function network element, the traffic abnormality notification to the terminal device, where the traffic abnormality notification is used to notify that the traffic corresponding to the first data packet is abnormal traffic.

After the user plane function network element determines that the traffic corresponding to the first data packet is abnormal traffic, the user plane function network element may further generate the traffic abnormality notification if the traffic corresponding to the first data packet is abnormal traffic. The user plane function network element sends the traffic abnormality notification to the terminal device. The terminal device can obtain the traffic abnormality notification, and can determine, by using the traffic abnormality notification, that the traffic corresponding to the first data packet is abnormal traffic.

In some embodiments of this application, the sending, by the user plane function network element, the traffic abnormality notification to the terminal device includes: adding, by the user plane function network element, the traffic abnormality notification to a data message.

The user plane function network element may send the traffic abnormality notification to the terminal device by using the data message. A specific frame format of the data message is not limited.

The user plane function network element sends the traffic abnormality notification to a control plane function network element, so that the traffic abnormality notification may be sent to the terminal device through the control plane function network element. Specifically, the traffic abnormality notification may be carried in a signaling message (such as a message in a PDU Session Modification procedure initiated by a network side, or a Paging message in a Service Request procedure initiated by the network side).

In some embodiments of this application, after step 203 that the user plane function network element determines that the traffic corresponding to the first data packet is abnormal traffic, the traffic processing method provided in this embodiment of this application further includes the following step:
stopping, by the user plane function network element, sending a data packet corresponding to the abnormal traffic, and buffering the data packet corresponding to the abnormal traffic.

After the user plane function network element determines that the traffic corresponding to the first data packet is abnormal traffic, the user plane function network element may buffer a received data packet based on some detection information corresponding to the first data packet, for example, buffer the data packet based on the IP quintuplets (such as a source IP address/port, a target IP address/port, or a transmission protocol) corresponding to the first data packet. Traffic corresponding to one group of the IP quintuplets may include a plurality of data packets. The user plane function network element stops sending the data packet corresponding to the abnormal traffic, thereby reducing traffic loss of the party enabling the Wi-Fi hotspot.

Further, in some embodiments of this application, in the foregoing implementation scenario in which the foregoing steps are performed, the traffic processing method provided in this embodiment of this application may further include the following steps:
receiving, by the user plane function network element, a traffic abnormality answer from the terminal device, where the traffic abnormality answer includes that: there is traffic abnormality or there is no traffic abnormality; and
when the user plane function network element determines, based on the traffic abnormality answer, that the traffic corresponding to the first data packet is abnormal traffic, discarding, by the user plane function network element, the data packet that corresponds to the abnormal traffic and is buffered by the user plane function network element; or
when the user plane function network element determines, based on the traffic abnormality answer, that the traffic corresponding to the first data packet is not abnormal traffic, sending, by the user plane function network element, to the terminal device, the data packet that corresponds to the abnormal traffic and is buffered by the user plane function network element.

The terminal device receives the traffic abnormality notification from the user plane function network element. The terminal device may display the traffic abnormality notification to a user, and the user may respond to the traffic abnormality notification. For example, the user may identify whether the traffic is abnormal, and the user may send the traffic abnormality answer to the user plane function network element through the terminal device. When the user plane function network element determines, based on the traffic abnormality answer, that the traffic corresponding to the first data packet is abnormal traffic, the user plane function network element discards the buffered data packet corresponding to the abnormal traffic, thereby reducing traffic loss of the party enabling the Wi-Fi hotspot. When the traffic abnormality answer determines that the traffic corresponding to the first data packet is not abnormal traffic, the user plane function network element sends the buffered data packet corresponding to the abnormal traffic, so that the party enabling the Wi-Fi hotspot can provide traffic for the party using the Wi-Fi hotspot.

In some embodiments of this application, in addition to performing the foregoing steps of the method, the traffic processing method provided in this embodiment of this application may further include the following steps:
receiving, by the user plane function network element, a traffic abnormality answer from the terminal device, where the traffic abnormality answer includes that: there is traffic abnormality or there is no traffic abnormality; and
sending, by the user plane function network element, the traffic abnormality answer to the data analytics network element.

The terminal device receives the traffic abnormality notification from the user plane function network element. The terminal device may display the traffic abnormality notification to a user, and the user may respond to the traffic abnormality notification. For example, the user may identify whether the traffic is abnormal, and the user may send the traffic abnormality answer to the user plane function network element through the terminal device. The user plane function network element may further send the traffic abnormality answer to the data analytics network element, and the data analytics network element may determine, based on the traffic abnormality answer, whether there is traffic abnormality. The data analytics network element can update, based on the traffic abnormality answer, information about the service type that the terminal device allows to be used when the Wi-Fi hotspot is enabled, so that during online detection, it can be more accurately identified whether the data packet is abnormal traffic.

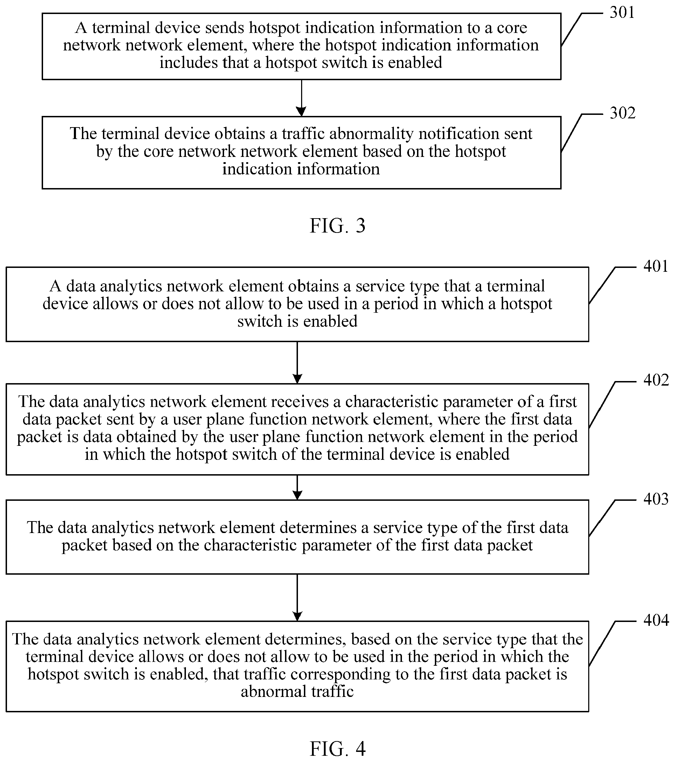

The foregoing embodiment describes the traffic processing method provided in the embodiments of this application from the perspective of the user plane function network element. The traffic processing method provided in the embodiments of this application is described from the side of a terminal device below. Referring to FIG. 3, the traffic processing method provided in the embodiments of this application may include the following steps.

301. A terminal device sends hotspot indication information to a core network network element, where the hotspot indication information includes that a hotspot switch of the terminal device is enabled.

In this embodiment of this application, the terminal device is a party enabling the hotspot. For example, the terminal device may be a party enabling a Wi-Fi hotspot. When a user enables the hotspot switch, the terminal device generates the hotspot indication information. The terminal device may send the hotspot indication information to a user plane function network element through a RAN.

In a possible design of this embodiment of this application, in addition to performing the foregoing steps of the method, the traffic processing method according to this embodiment of this application may further include the following step: sending, by the terminal device, to the core network network element, a service type that the terminal device does not allow or allows to be used in the period in which the hotspot switch is enabled.

The service type not allowed or allowed to be used in the period in which the Wi-Fi hotspot is enabled may also be content in the hotspot indication information, so that the hotspot indication information sent to the core network network element by the terminal device, in addition to including the notification that the hotspot switch is enabled, further includes information about the service type not allowed or allowed to be used in the period in which the Wi-Fi hotspot is enabled.

In a possible design of this embodiment of this application, the core network network element may include one of: a control plane function network element, the user plane function network element, a policy network element, and a data analytics network element. Using a 4G system as an example, the control plane function network element and the user plane function network element may be specifically PGW network elements. Using a 5G system as an example, the control plane function network element may be specifically an SMF network element, the user plane function network element may be specifically a UPF network element, and the data analytics network element may be specifically the foregoing NWDAF network element.

302. The terminal device obtains a traffic abnormality notification from the core network network element based on the hotspot indication information.

In this embodiment of this application, the core network network element may determine that traffic corresponding to a first data packet is abnormal traffic, and then the core network network element may send the traffic abnormality notification to the terminal device. The traffic abnormality notification is used to notify that the traffic corresponding to the first data packet is abnormal traffic.

In a possible design of this embodiment of this application, after step 302 that the terminal device obtains the traffic abnormality notification from the core network network element based on the hotspot indication information, the traffic processing method provided in this embodiment of this application may further include the following step:
sending, by the terminal device, a traffic abnormality answer to the core network network element, where the traffic abnormality answer includes: there is traffic abnormality or there is no traffic abnormality.

The terminal device receives the traffic abnormality notification from the user plane function network element. The terminal device may display the traffic abnormality notification to a user, and the user may respond to the traffic abnormality notification. For example, the user may identify whether the traffic is abnormal, and the user may send the traffic abnormality answer to the core network network element through the terminal device. The core network network element may determine, based on the traffic abnormality answer, whether there is traffic abnormality. The core network network element can update, based on the traffic abnormality answer, the service type that the terminal device allows to be used when the Wi-Fi hotspot is enabled, so that during online detection, it can be more accurately identified whether there is abnormal traffic.

In a possible design of this embodiment of this application, after step 302 that the terminal device obtains the traffic abnormality notification from the core network network element based on the hotspot indication information, the traffic processing method provided in this embodiment of this application may further include the following steps:
disabling, by the terminal device based on the traffic abnormality notification, the hotspot of the terminal device; or
disabling, by the terminal device, a connection that is of a hotspot user and that generates abnormal traffic; or
prohibiting, by the terminal device, a service type generating abnormal traffic from using the hotspot of the terminal device.

Processing after the terminal device receives traffic abnormality information is not limited in this embodiment of this application. For example, after it is determined that there is abnormal traffic, the Wi-Fi hotspot may be disabled, or it may be determined that a Wi-Fi hotspot user disables a connection of the user, or a service type is temporarily banned. A specific implementation is not limited herein.

In the foregoing embodiments, it can be learned from the descriptions of the traffic processing method according to the embodiments of this application, the terminal device sends the hotspot indication information to the core network network element, and the terminal device obtains the traffic abnormality notification from the core network network element based on the hotspot indication information, so that the terminal device may determine, based on the traffic abnormality notification, data packets corresponding to abnormal traffic.

The foregoing embodiment describes the traffic processing method according to the embodiments of this application from the perspective of the terminal device. The traffic processing method according to the embodiments of this application is described from the side of a data analytics network element below. Referring to FIG. 4, the traffic processing method according to the embodiments of this application may include the following steps.

401. A data analytics network element obtains a service type that a terminal device allows or does not allow to be used in a period in which a hotspot switch is enabled.

In this embodiment of this application, the data analytics network element may be specifically the foregoing NWDAF network element. The data analytics network element first obtains the service type that the terminal device allows to be used in the period in which the hotspot switch is enabled, or the data analytics network element obtains the service type that the terminal device does not allow to be used in the period in which the hotspot switch is enabled. For example, the data analytics network element may obtain the service type in a manner of big data analysis, or the data analytics network element may obtain the service type through the terminal device.

In a possible design of this embodiment of this application, step 401 that the data analytics network element obtains the service type that the terminal device allows or does not allow to be used in the period in which the wireless fidelity hotspot switch is enabled includes:
determining, by the data analytics network element based on training data, the service type that the terminal device allows or does not allow to be used in the period in which the hotspot switch is enabled; or
receiving, by the data analytics network element, the service type that is from the terminal device and that the terminal device allows or does not allow to be used in the period in which the hotspot switch is enabled.

There may be the following two implementations in which the data analytics network element obtains the service type that the terminal device allows or does not allow to be used in the period in which the hotspot switch is enabled: The UE sends an allowed or unallowed service type list to the data analytics network element, or the data analytics network element performs machine learning training, to obtain a service type identification model. The training data used for machine learning may include two types of data. One type is application data including a size, a start and end time, IP quintuplets, and a service type that are of a data packet, from an operator platform, an OTT (Over The Top) server, a vertical industry management and control center, or the like. Another type is network data including a UE identifier, a terminal type (Terminal Type), an access point name (Access Point Name, APN), a data network name (Data Network Name, DNN), radio channel quality on a base station side, a cell ID (Cell ID), and other information from a network side. The data analytics network element may obtain the service type identification model based on the two types of information, and can classify a data packet of the UE that flows through the UPF network element, thereby obtaining the service type that the UE allows to be used in the period in which the Wi-Fi hotspot of the UE is enabled.

402. The data analytics network element receives a characteristic parameter of a first data packet from the user plane function network element, where the first data packet is a data packet obtained by the user plane function network element in the period in which the hotspot switch of the terminal device is enabled.

In this embodiment of this application, the characteristic parameter includes a parameter used to represent a service type of a data packet. For example, the characteristic parameter may be a feature vector. The user plane function network element may specifically obtain the characteristic parameter of the first data packet in a manner of feature engineering. The user plane function network element may further send the characteristic parameter of the first data packet to the data analytics network element. For example, the user plane function network element sends the characteristic parameter of the first data packet to an SMF network element, the SMF network element sends the characteristic parameter of the first data packet to a PCF network element, and the PCF network element sends the characteristic parameter of the first data packet to the NWDAF network element. The NWDAF network element may receive the characteristic parameter of the first data packet from the user plane function network element.

403. The data analytics network element determines a service type of the first data packet based on the characteristic parameter of the first data packet.

In this embodiment of this application, the data analytics network element may determine the service type of the first data packet through the service type identification model. For example, the data analytics network element may obtain a feature list of the service type identification model through feature learning, thereby obtaining a model parameter of the service type identification model through training, and performing calculation based on the characteristic parameter of the first data packet and the service identification model, so that the service type of the first data packet may be determined.

404. The data analytics network element determines, based on the service type that the terminal device allows or does not allow to be used in the period in which the hotspot switch is enabled, that traffic corresponding to the first data packet is abnormal traffic.

In this embodiment of this application, the data analytics network element may determine the service type of the first data packet through step 403, and match the service type of the first data packet and the service type that is obtained in step 401 and that the terminal device allows or does not allow to be used in the period in which the hotspot switch is enabled, thereby determining that the traffic corresponding to the first data packet is abnormal traffic. For example, the data analytics network element obtains the service type that the terminal device allows to be used in the period in which the hotspot switch is enabled. If the service type of the first data packet is not the service type allowed to be used, it may be determined that the traffic corresponding to the first data packet is abnormal traffic. For another example, the data analytics network element obtains the service type that the terminal device does not allow to be used in the period in which the hotspot switch is enabled. If the service type of the first data packet is the service type not allowed to be used, it may be determined that the traffic corresponding to the first data packet is abnormal traffic.

In a possible design of this embodiment of this application, after step 404 that it is determined that the traffic corresponding to the first data packet is abnormal traffic, the traffic processing method according to this embodiment of this application may further include the following step:
sending, by the data analytics network element, a traffic abnormality notification to a control plane function network element or the user plane function network element, where the traffic abnormality notification is used to notify that the traffic corresponding to the first data packet is abnormal traffic.

In this embodiment of this application, the data analytics network element may determine that the traffic corresponding to the first data packet is abnormal traffic, and then the data analytics network element may send the traffic abnormality notification to the control plane function network element or the user plane function network element. After the control plane function network element or the user plane function network element receives the traffic abnormality notification, the control plane function network element or the user plane function network element sends the traffic abnormality notification, and may further forward the traffic abnormality notification to the terminal device. For details, refer to examples for description of the terminal device side in the foregoing embodiments.

In a possible design of this embodiment of this application, in addition to performing the foregoing steps of the method, the traffic processing method according to this embodiment of this application may further include the following steps:
receiving, by the data analytics network element, a traffic abnormality answer from the terminal device, where the traffic abnormality answer includes that: there is traffic abnormality or there is no traffic abnormality; and
updating, by the data analytics network element based on the traffic abnormality answer, the service type that the terminal device allows or does not allow to be used in the period in which the hotspot switch is enabled.

The terminal device receives the traffic abnormality notification from the user plane function network element. The terminal device may display the traffic abnormality notification to a user, and the user may respond to the traffic abnormality notification. For example, the user may identify whether the traffic is abnormal, and the user may send the traffic abnormality answer to the user plane function network element through the terminal device. The user plane function network element may further send the traffic abnormality answer to the data analytics network element, and the data analytics network element may determine, based on the traffic abnormality answer, whether there is traffic abnormality. The data analytics network element can update, based on the traffic abnormality answer, the service type that is allowed to be used in the period in which the hotspot is enabled, so that it can be more accurately identified whether the data packet is abnormal traffic.

In the foregoing embodiments, it can be learned from the descriptions of the traffic management method according to the embodiments of this application that, the data analytics network element obtains the service type that the terminal device allows or does not allow to be used in the period in which the hotspot switch is enabled; the data analytics network element receives the characteristic parameter of the first data packet from the user plane function network element, where the first data packet is a data packet obtained by the user plane function network element in the period in which the hotspot switch of the terminal device is enabled; the data analytics network element determines the service type of the first data packet based on the characteristic parameter of the first data packet; and the data analytics network element determines, based on the service type that the terminal device allows or does not allow to be used in the period in which the hotspot switch is enabled, that the traffic corresponding to the first data packet is abnormal traffic. In this embodiment of this application, the data analytics network element may obtain the service type of the first data packet from the user plane function network element, and may determine, based on the service type that the terminal device allows or does not allow to be used in the period in which the hotspot switch is enabled, that the traffic corresponding to the first data packet is abnormal traffic, thereby accurately identifying the abnormal traffic and improving traffic management effects.

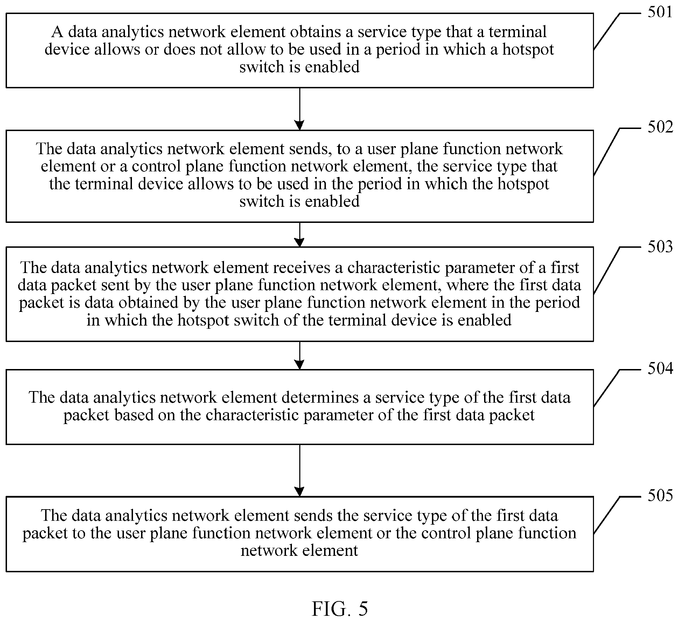

The foregoing embodiment describes a traffic processing method according to the embodiments of this application from the perspective of the data analytics network element. Another traffic processing method according to the embodiments of this application is described from the side of a data analytics network element below. Referring to FIG. 5, the traffic processing method according to the embodiments of this application may include the following steps.

501. A data analytics network element obtains a service type that a terminal device allows or does not allow to be used in a period in which a hotspot switch is enabled.

In this embodiment of this application, the data analytics network element may be specifically the foregoing NWDAF network element. The data analytics network element first obtains the service type that the terminal device allows to be used in the period in which the hotspot switch is enabled, or the data analytics network element obtains the service type that the terminal device does not allow to be used in the period in which the hotspot switch is enabled. For example, the data analytics network element may obtain the service type in a manner of feature engineering, or the data analytics network element may obtain the service type through the terminal device.

In a possible design of this embodiment of this application, step 501 that the data analytics network element obtains the service type that the terminal device allows or does not allow to be used in the period in which the hotspot switch is enabled includes:
determining, by the data analytics network element based on training data, the service type that the terminal device allows or does not allow to be used in the period in which the hotspot switch is enabled.

502. The data analytics network element sends, to a user plane function network element or a control plane function network element, the service type that the terminal device allows to be used in the period in which the hotspot switch is enabled.

In this embodiment of the present invention, the data analytics network element may send, to the user plane function network element or the control plane function network element, the service type that the terminal device allows to be used in the period in which the hotspot switch is enabled, so that the user plane function network element or the control plane function network element can determine the service type that the terminal device allows to be used in the period in which the hotspot switch is enabled.

503. The data analytics network element receives a characteristic parameter of a first data packet from the user plane function network element, where the first data packet is data obtained by the user plane function network element in the period in which the hotspot switch of the terminal device is enabled.

In this embodiment of this application, the characteristic parameter is a parameter used to represent a service type of a data packet. For example, the characteristic parameter may be a feature vector, and the user plane function network element may specifically obtain the characteristic parameter of the first data packet through calculation in a manner of feature engineering. The user plane function network element may further send the characteristic parameter of the first data packet to the data analytics network element. For example, the user plane function network element sends the characteristic parameter of the first data packet to an SMF network element, the SMF network element sends the characteristic parameter of the first data packet to a PCF network element, and the PCF network element sends the characteristic parameter of the first data packet to the NWDAF network element. The NWDAF network element may receive the characteristic parameter of the first data packet from the user plane function network element.

504. The data analytics network element determines a service type of the first data packet based on the characteristic parameter of the first data packet.

In this embodiment of this application, the data analytics network element may determine the service type of the first data packet through the service type identification model. For example, the data analytics network element may obtain a feature list of the service type identification model through feature learning, thereby obtaining a model parameter of the service type identification model through training, and performing calculation based on the characteristic parameter of the first data packet and the service identification model, so that the service type of the first data packet may be determined.

505. The data analytics network element sends the service type of the first data packet to the user plane function network element or the control plane function network element.

In this embodiment of this application, after the data analytics network element determines the service type of the first data packet, the data analytics network element sends the service type of the first data packet to the user plane function network element or the control plane function network element, so that the user plane function network element or the control plane function network element can perform matching based on the service type of the first data packet and the service type that the terminal device allows to be used in the period in which the hotspot switch is enabled, and the user plane function network element or the control plane function network element can autonomously determine whether the traffic corresponding to the first data packet is abnormal traffic. In this embodiment of this application, the data analytics network element can be used for determining the service type of the first data packet, but the data analytics network element does not determine a traffic abnormality situation. Instead, the user plane function network element or the control plane function network element can autonomously determine whether the traffic corresponding to the first data packet is abnormal traffic.

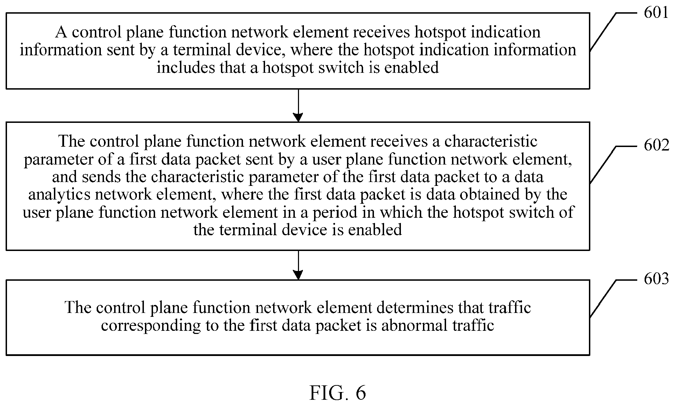

The foregoing embodiment describes a traffic processing method according to the embodiments of this application from the perspective of the data analytics network element. The traffic processing method according to the embodiments of this application is described from the side of a control plane function network element below. Referring to FIG. 6, the traffic processing method according to the embodiments of this application may include the following steps.

601. A control plane function network element receives hotspot indication information from a terminal device, where the hotspot indication information includes that a hotspot switch is enabled.

In this embodiment of this application, the control plane function network element may be an SMF network element in a 5G system. The terminal device is a party enabling the Wi-Fi hotspot. When a user enables the hotspot switch, the terminal device generates the hotspot indication information. The terminal device may send the hotspot indication information to a user plane function network element through a RAN, the user plane function network element forwards the hotspot indication information to the control plane function network element, and the control plane function network element parses the hotspot indication information and determines that the hotspot switch of the terminal device is enabled.

602. The control plane function network element receives a characteristic parameter of a first data packet from the user plane function network element, and sends the characteristic parameter of the first data packet to a data analytics network element, where the first data packet is data obtained by the user plane function network element in a period in which the hotspot switch of the terminal device is enabled.

In this embodiment of this application, the user plane function network element transmits the data in the period in which the hotspot switch of the terminal device is enabled. Data transmission of the user plane function network element may be divided into uplink transmission and downlink transmission. After the user plane function network element obtains the data packet in the period in which the hotspot switch of the terminal device is enabled, the user plane function network element may further obtain a characteristic parameter of the data packet, for example, may obtain a characteristic parameter of the first data packet. The user plane function network element sends the characteristic parameter of the first data packet to the control plane function network element, and the control plane function network element may further forward the characteristic parameter of the first data packet to the data analytics network element.

603. The control plane function network element determines that traffic corresponding to the first data packet is abnormal traffic.

In this embodiment of this application, after the control plane function network element sends the characteristic parameter of the first data packet to the data analytics network element, the control plane function network element determines that the traffic corresponding to the first data packet is abnormal traffic. There may be a plurality of implementations in which the control plane function network element determines that the traffic corresponding to the first data packet is abnormal traffic. Descriptions are made with examples below.

In a possible design of this embodiment of this application, after step 603 that the control plane function network element determines that traffic corresponding to the first data packet is abnormal traffic, the traffic processing method according to this embodiment of this application further includes:
sending, by the control plane function network element, a traffic abnormality notification to the terminal device, where the traffic abnormality notification is used to notify that the traffic corresponding to the first data packet is abnormal traffic.

The control plane function network element may send the traffic abnormality notification to the terminal device. The terminal device may parse the traffic abnormality notification, and may determine, based on the traffic abnormality notification, that the traffic corresponding to the first data packet is abnormal traffic.

In a possible design of this embodiment of this application, the sending, by the control plane function network element, the traffic abnormality notification to the terminal device includes:
adding, by the control plane function network element, the traffic abnormality notification to control signaling.

The control plane function network element may send the traffic abnormality notification to the terminal device in a manner of the control signaling. A specific message of the control signaling is not limited.

In a possible design of this embodiment of this application, step 603 that the control plane function network element determines that traffic corresponding to the first data packet is abnormal traffic includes:
receiving, by the control plane function network element, the traffic abnormality notification from the data analytics network element or the user plane function network element.

The control plane function network element may receive the traffic abnormality notification from the data analytics network element or the user plane network element. The control plane function network element parses the traffic abnormality notification, and may determine, based on the traffic abnormality notification, that the traffic corresponding to the first data packet is abnormal traffic. The data analytics network element may identify the service type of the first data packet by using the characteristic parameter of the first data packet, determine, based on the service type of the first data packet, whether the traffic corresponding to the first data packet is abnormal traffic, and generate the traffic abnormality notification if the traffic corresponding to the first data packet is abnormal traffic.

In a possible design of this embodiment of this application, step 603 that the control plane function network element determines that traffic corresponding to the first data packet is abnormal traffic includes:
receiving, by the control plane function network element, a service type that is from the data analytics network element or the terminal device and that the terminal device allows or does not allow to be used in the period in which the hotspot switch is enabled;
receiving, by the control plane function network element, the service type that is from the data analytics network element and that is of the first data packet; and
determining, by the control plane function network element based on the service type that the terminal device allows or does not allow to be used in the period in which the hotspot switch is enabled, that the traffic corresponding to the first data packet is abnormal traffic.

In an implementation scenario of the foregoing steps, the control plane function network element may obtain the service type that the terminal device allows to be used in the period in which the hotspot switch is enabled, or the control plane function network element may obtain the service type that the terminal device does not allow to be used in the period in which the hotspot switch is enabled. The service type may be sent to the control plane function network element by the data analytics network element, or be sent to the control plane function network element by the terminal device. The data analytics network element may identify the service type of the first data packet by using the characteristic parameter of the first data packet, and send the service type of the first data packet to the control plane function network element. The control plane function network element may determine, by using the service type obtained in the foregoing steps, whether the traffic corresponding to the first data packet is abnormal traffic.

In a possible design of this embodiment of this application, after step 603 that the control plane function network element determines that traffic corresponding to the first data packet is abnormal traffic, the traffic processing method according to this embodiment of this application further includes:
instructing, by the control plane function network element, the user plane function network element to stop sending the traffic corresponding to the first data packet, and to buffer the traffic corresponding to the first data packet.

After the control plane function network element determines that the traffic corresponding to the first data packet is abnormal traffic, the control plane function network element instructs that the user plane function network element may perform buffering based on data packets of IP quintuplets corresponding to the first data packet. Traffic corresponding to one group of the IP quintuplets may include a plurality of data packets. The user plane function network element stops sending the data packet corresponding to the abnormal traffic, thereby reducing traffic loss of the party enabling the Wi-Fi hotspot.

In a possible design of this embodiment of this application, the traffic processing method according to this embodiment of this application further includes:
receiving, by the control plane function network element, a traffic abnormality answer from the terminal device, where the traffic abnormality answer includes that: there is traffic abnormality or there is no traffic abnormality; and
when the control plane function network element determines, based on the traffic abnormality answer, that the traffic corresponding to the first data packet is abnormal traffic, instructing, by the control plane function network element, the user plane function network element to discard the buffered data packet corresponding to the abnormal traffic; or
when the control plane function network element determines, based on the traffic abnormality answer, that the traffic corresponding to the first data packet is not abnormal traffic, instructing, by the control plane function network element, the user plane function network element to forward the buffered data packet corresponding to the abnormal traffic.

The terminal device receives the traffic abnormality notification from the user plane function network element. The terminal device may display the traffic abnormality notification to a user, and the user may respond to the traffic abnormality notification. For example, the user may identify whether the traffic is abnormal, and the user may send the traffic abnormality answer to the control plane function network element through the terminal device. When the control plane function network element determines, based on the traffic abnormality answer, that the traffic corresponding to the first data packet is abnormal traffic, the control plane function network element instructs the user plane function network element to discard the buffered data packet corresponding to the abnormal traffic, thereby reducing traffic loss of the party enabling the Wi-Fi hotspot. When the traffic abnormality answer determines that the traffic corresponding to the first data packet is not abnormal traffic, the control plane function network element instructs the user plane function network element to send the buffered data packet corresponding to the abnormal traffic, so that the party enabling the Wi-Fi hotspot can provide traffic for the party using the Wi-Fi hotspot.

In a possible design of this embodiment of this application, the traffic processing method according to this embodiment of this application further includes:
receiving, by the control plane function network element, a traffic abnormality answer from the terminal device, where the traffic abnormality answer includes that: there is traffic abnormality or there is no traffic abnormality; and
forwarding, by the control plane function network element, the traffic abnormality answer to the data analytics network element.

The terminal device receives the traffic abnormality notification from the control plane function network element. The terminal device may display the traffic abnormality notification to a user, and the user may respond to the traffic abnormality notification. For example, the user may identify whether the traffic is abnormal, and the user may send the traffic abnormality answer to the control plane function network element through the terminal device. The control plane function network element may further send the traffic abnormality answer to the data analytics network element, and the data analytics network element may determine, based on the traffic abnormality answer, whether there is traffic abnormality. The data analytics network element can update, based on the traffic abnormality answer, the service type that is allowed to be used in the period in which the hotspot switch is enabled, so that the service type of the data packet can be more accurately identified, to provide the accurate service type to analysis of the abnormal traffic.

In the foregoing embodiments, it can be learned from the descriptions of the example of the traffic management method provided in the embodiments of this application that, in this embodiment of this application, the control plane function network element may obtain the service type of the first data packet from the user plane function network element, and may determine, based on the service type that the terminal device allows or does not allow to be used in the period in which the hotspot switch is enabled, that the traffic corresponding to the first data packet is abnormal traffic, thereby accurately identifying the abnormal traffic and improving traffic management effects.

To better understand and implement the foregoing solutions of the embodiments of this application, specific descriptions are provided below by using a corresponding application scenario as an example.

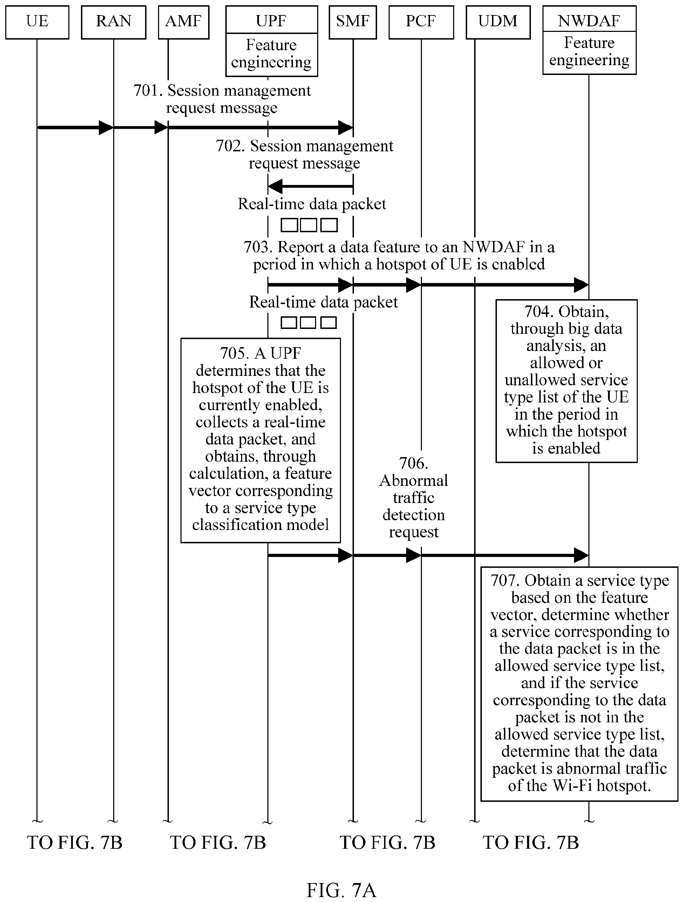

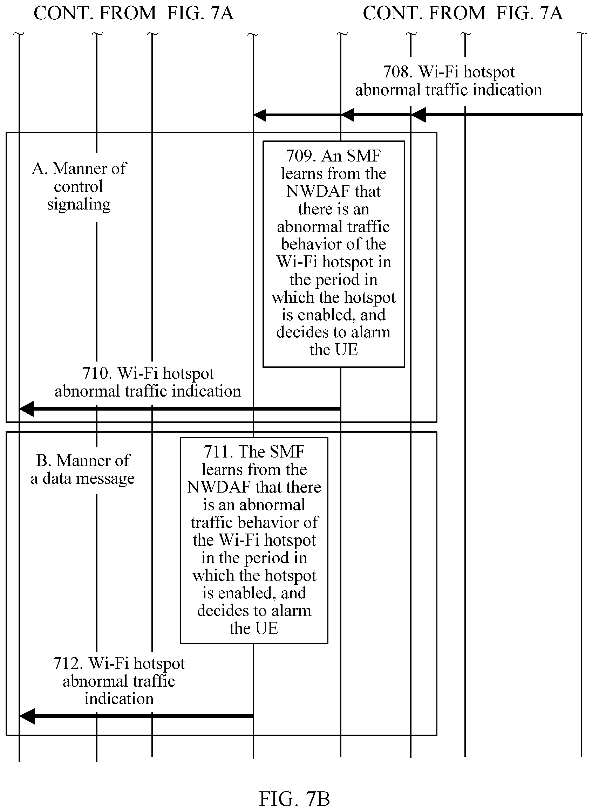

FIG. 7A and FIG. 7B are schematic flowcharts of UE Hotspot Off enabled/disabled state interaction among a plurality of network elements in a 5G system. Description is made by using an example in which an interaction procedure is a PDU Session Establishment/Modification procedure initiated by the UE. The procedure may alternatively be a Service Request/Registration procedure initiated by the UE. Details are not described herein again. The following steps are mainly included:
701. UE sends a session management request message to an SMF network element.

For example, the UE functions as a party enabling a Wi-Fi hotspot, and the UE reports a UE Hotspot Off enabled/disabled state or an enabled/disabled state of another specific mode to a network. Optionally, at the same time, the UE also reports, to the network, a service type not allowed to be used in a period in which the UE Hotspot Off is enabled. An example of the enabled state of the hotspot is used in subsequent descriptions. For example, in a session establishment/modification procedure, hotspot state information is notified to the SMF network element, and may be carried in the session management request message (PDU session establishment/modification request) through RAN-AMF-SMF. Names of the message in each state are different, but all are for session establishment or modification.

702. The SMF network element sends the session management request message to a UPF network element.

For example, the SMF notifies the UPF network element of the hotspot state information, and the hotspot state information may be carried in the session management request message (N4 session establishment/modification request).

Through the foregoing steps 701 and 702, the SMF network element and the UPF network element both obtain the current hotspot state information of the UE.

703. The UPF network element reports, to an NWDAF network element, a data feature of a data packet of the UE in the period in which the hotspot is enabled.

The NWDAF network element functions as a network element determining data traffic abnormality. For the service data packet in the period in which the Hotspot is enabled, the NWDAF network element collects the data feature, such as a UE ID/IP, a time/period, a data packet size/quantity, or an extended field, as training data.

704. The NWDAF network element obtains, through big data analysis, an allowed or unallowed service type list of the UE in the period in which the hotspot is enabled.

For each UE, the NWDAF network element performs big data analysis, assumes a behavior or a model of service type determining, obtains, by learning, a feature list of the service type determining model, and synchronizes the feature list corresponding to the model to feature engineering on the NWDAF network element and the UPF network element. The feature list in a feature vector may be understood as a parameter name. The feature vector reported to the NWDAF network element by the UPF network element is a parameter value. The NWDAF network element obtains, through training, the allowed (or unallowed) service type list of the UE in a specific state (the hotspot enabled state).

705. The UPF network element determines that the hotspot of the UE is currently enabled, collects a real-time data packet, and obtains, through calculation, a feature vector corresponding to the service type determining model.

When the Hotspot is enabled, the UPF network element receives a new data packet, and calculates a feature vector based on the local feature engineering.

706. The UPF network element sends an abnormal traffic detection request to the NWDAF network element.

The UPF network element reports, through the SMF network element and the PCF network element, the feature vector obtained through calculation to the NWDAF network element, and requests the NWDAF network element to discriminate a data service type.

707. The NWDAF network element obtains the service type based on the feature vector, determines whether a service corresponding to the data packet is in the allowed service type list, and if the service corresponding to the data packet is not in the allowed service type list, determines that the data packet is abnormal traffic of the Wi-Fi hotspot.

The NWDAF network element obtains the service type of the current data based on the feature vector, and compares the service type with the service type list obtained through training in the foregoing steps, to determine whether the service data flow corresponding to the current data packet is abnormal traffic.

708. The NWDAF network element sends a Wi-Fi hotspot abnormal traffic indication to the UPF network element.

After the NWDAF network element determines that the current data service is abnormal traffic, the abnormal traffic indication is forwarded to the SMF network element and the UPF network element by the PCF network element.

Based on an analysis result of the NWDAF network element, a state of the UE, and the abnormal traffic indication of the NWDAF network element, the PCF network element can decide to send an indication to the SMF network element or the UPF network element. For example, if a policy in the PCF network element requires notifying, in a manner of control signaling, the UE of the abnormal traffic indication information in the enabled state of the Wi-Fi hotspot, the PCF network element may instruct the SMF network element to perform the notifying in a manner A or a manner B. Certainly, if there is originally only one policy, a problem of policy selection does not exist, but it is necessary to learn from the PCF network element which policy is to be used.

An implementable manner A includes:
709. The SMF learns from the NWDAF that there is an abnormal traffic behavior of the Wi-Fi hotspot in the period in which the hotspot is enabled, and decides to alarm the UE.

710. The Wi-Fi hotspot abnormal traffic indication.

The SMF network element, after receiving the abnormal traffic indication delivered by the NWDAF network element, determines that there is suspected data packet abnormality on the current UE, and alarms the UE. The SMF network element initiates an alarm carrying the abnormal traffic indication to the UE.

An implementable manner B includes:
711. The SMF learns from the NWDAF that there is an abnormal traffic behavior of the Wi-Fi hotspot in the period in which the hotspot is enabled, and decides to alarm the UE.

712. The Wi-Fi hotspot abnormal traffic indication.

The UPF network element, after receiving the abnormal traffic indication delivered by the NWDAF network element, learns that there is suspected data packet abnormality on the current UE, and alarms the UE. The UPF network element initiates an alarm carrying the abnormal traffic indication to the UE.

Specifically, the UPF network element may send a specific data packet of the abnormal traffic indication, and adds the abnormal traffic indication information to a header of the data packet. For example, a message includes an abnormal traffic indication field, or the abnormal traffic indication information is added to an extended field except a standard field. The UE, after receiving the message, can obtain the abnormal traffic indication information in the header. The message may be a message independent of the current service data, or may be a data message of the current service.

In this embodiment of this application, processing after the UE receives the abnormal traffic indication information is not limited, and may be determining the abnormality and disabling the Wi-Fi hotspot, determining a party using the Wi-Fi hotspot and disabling a connection of the user, temporarily prohibiting a service type, or the like.

Through the solutions of this embodiment, the NWDAF network element can monitor, in real time, a service condition of the party enabling the Wi-Fi hotspot; obtain the service type of the data by analyzing the data feature; determine, based on the allowed/unallowed service type list in the current state obtained through training, whether the current service is abnormal traffic; and send the determining result of the NWDAF network element to a data forwarding control network element and a data forwarding network element that decide to send the abnormal traffic indication to the UE. The UE decides a subsequent operation.

Compared with the prior art, this embodiment of this application gets rid of a manner of manual setting, or adds a manner of network analysis and indication based on the existing manual setting. For a user in a specific state, a data analytics network element in the network obtains a service type by analyzing a data service; determines, by comparing the service type with the allowed/unallowed service type list in the current state obtained through training, whether data of the service type is abnormal traffic in the current state; and sends the abnormal traffic indication to a network element (such as the SMF network element or the UPF network element) related to data processing in the network. The network element related to data processing sends the abnormal traffic indication to the UE.

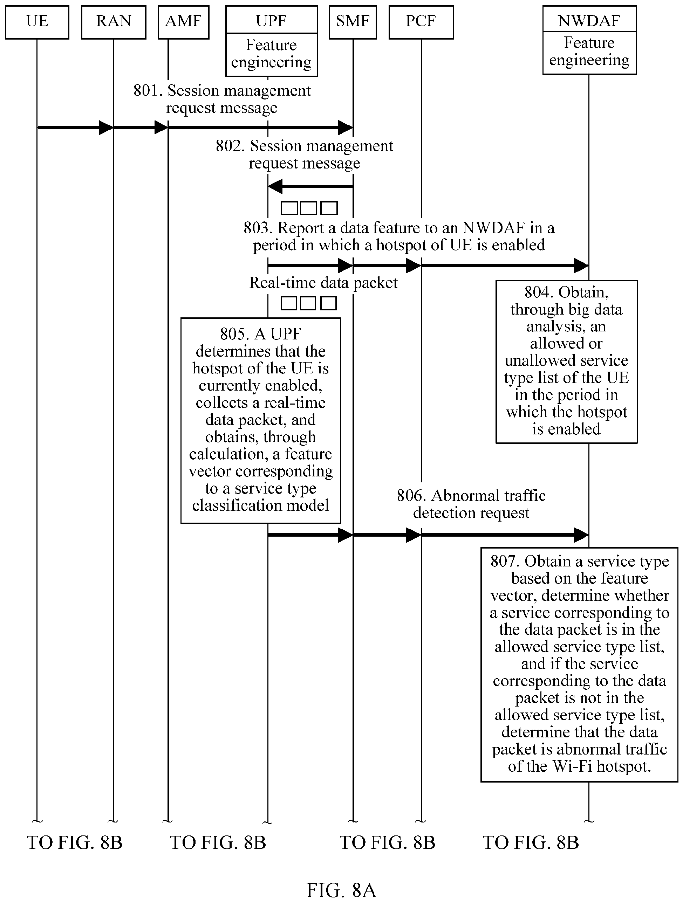

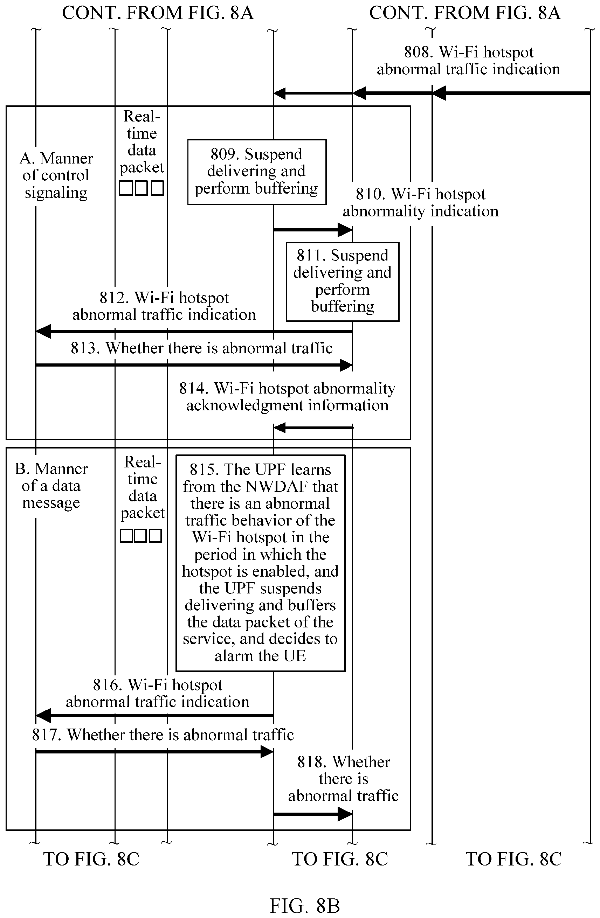

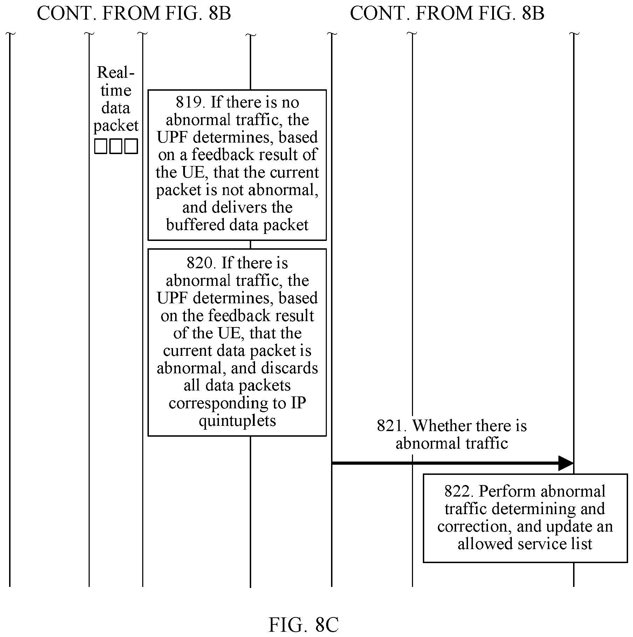

As shown in FIG. 8A, FIG. 8B, and FIG. 8C, another procedure of interaction among a plurality of network elements in a 5G system provided in an embodiment of this application is described below, and mainly includes the following process:
801. UE sends a session management request message to an SMF network element.

802. The SMF network element sends the session management request message to a UPF network element.

803. The UPF network element reports, to an NWDAF network element, a data feature of a data packet of the UE in a period in which a hotspot is enabled.

804. The NWDAF network element obtains, through big data analysis, an allowed or unallowed service type list the UE in the period in which the hotspot is enabled.

805. The UPF network element determines that the hotspot of the UE is currently enabled, collects a real-time data packet, and obtains, through calculation, a feature vector corresponding to a service type determining model.

806. The UPF network element sends an abnormal traffic detection request to the NWDAF network element.

807. The NWDAF network element obtains the service type based on the feature vector, determines whether a service corresponding to the data packet is in the allowed service type list, and if the service corresponding to the data packet is not in the allowed service type list, determines that the data packet is abnormal traffic of the Wi-Fi hotspot.

808. The NWDAF network element sends a Wi-Fi hotspot abnormal traffic indication to the UPF network element.

Step 801 to step 808 are the same as step 701 to step 708 in the processing procedure related to the NWDAF in the embodiment shown in FIG. 7A and FIG. 7B.

After step 808 is performed, there may be the following two implementations: manner A and manner B.

Manner A: A manner of control signaling includes step 809 to step 814.

809. The UPF network element suspends delivering and buffers a data packet.

810. The UPF network element sends the Wi-Fi hotspot abnormality indication to the SMF network element.

811. The SMF network element suspends delivering and buffers a data packet.

812. The SMF network element sends the Wi-Fi hotspot abnormal traffic indication to the UE.

813. The UE indicates to the SMF network element whether the data packet is abnormal traffic.

814. The SMF network element sends Wi-Fi hotspot abnormality acknowledgment information to the UPF network element.

The UPF network element, after receiving the abnormal traffic indication information delivered by the NWDAF network element, in addition to deciding to initiate the alarm to the UE, further suspends delivering and buffers the current service data. Because in this embodiment, the UPF network element, after receiving the abnormal traffic indication information from the NWDAF network element, needs to perform control on the service data, the UPF network element suspends delivering and buffers the service data. If the UPF network element decides to whether to initiate the alarm, the UPF network element further needs to instruct the SMF network element to send the abnormal traffic indication information to the UE. In another case, the SMF network element, after receiving the abnormal traffic indication information from the NWDAF network element, sends an alarm to the UE, and the UPF network element, after receiving the abnormal traffic indication information from the NWDAF network element, suspends delivering and buffers the data. The UE feeds back abnormal traffic acknowledgment information through a signaling message, and a result is Yes/No.

Manner B: A manner of a data message includes the following step 815 to step 818.

815. The UPF learns from the NWDAF that there is an abnormal traffic behavior of the Wi-Fi hotspot in the period in which the hotspot is enabled, and the UPF suspends delivering and buffers the data packet of the service, and decides to alarm the UE.

816. The UPF network element sends the Wi-Fi hotspot abnormal traffic indication to the UE.

817. The UE sends to the UPF network element whether the data packet is abnormal traffic.

818. The UPF network element sends to the SMF network element whether the data packet is abnormal traffic.

The UPF network element, after receiving the abnormal traffic indication information delivered by the NWDAF network element, in addition to deciding to initiate the alarm to the UE, further suspends delivering and buffers the current service data. The UE feeds back the abnormal traffic acknowledgment information in a data message manner, and a result is Yes/No. The UPF network element needs to report the acknowledgment information to the SMF network element.

819. If the data packet is not abnormal traffic, the UPF network element determines, based on the feedback result of the UE, that the current data packet is not abnormal, and delivers the buffered data packet. If the UE feeds back that the currently alarmed service is not abnormal traffic, the buffered data is delivered.

820. If the data packet is abnormal traffic, the UPF network element determines, based on the feedback result of the UE, that the current data packet is abnormal, and discards all data packets corresponding to the IP quintuplets.

If the UE feeds back that the currently alarmed service is abnormal traffic, the UPF network element discards the buffered service data.

821. The SMF network element sends to the NWDAF network element whether the data packet is abnormal traffic.

822. The NWDAF network element performs abnormal traffic determining and correction, and updates an allowed service list.

After the UPF network element/SMF network element receives the feedback of the UE, the UPF network element/SMF network element feeds back to the NWDAF network element in a reporting manner that the current service type is not abnormal traffic for the UE, to correct an abnormal traffic determining condition of the NWDAF network element. A most direct manner is to add the service type to the type list allowed in the period in which the hotspot is enabled, or to add a feature and a classification result of the service, as training data, to an algorithm for determining a service type, to update a feature list.

Based on the embodiment shown in FIG. 7A and FIG. 7B, in this embodiment, processing on the data message after the UPF network element receives the abnormal traffic indication information of the NWDAF network element is added, and the abnormal traffic determining by the NWDAF network element and the acknowledgment of the abnormal traffic indication by the UE can be inspected at the same time, thereby avoiding a problem caused by inaccurate abnormal traffic determining by the NWDAF network element. In addition, based on the feedback to the acknowledgement information by the UE, the NWDAF network element updates and corrects a service type determining model or the service type list allowed/unallowed in the state.

This embodiment differs from the embodiment shown in FIG. 7A and FIG. 7B in that, the SMF network element/UPF network element does not determine, only based on the indication information of the NWDAF network element, that the current data service is abnormal; and when the NWDAF network element delivers the abnormality indication, the indication information is sent to the UE, and an acknowledgment message of the UE is used as the final result. In a period of time in which the UPF network element has received the abnormality indication of the NWDAF network element and has not received the acknowledgment information of the UE, the UPF network element suspends delivering and buffers the service data, and decides, after receiving the acknowledgment information, to continue forwarding or discard the service data. The SMF/UPF reports the acknowledgment information of the UE to the NWDAF network element, so that the NWDAF network element corrects the abnormal traffic determining and updates the service list.

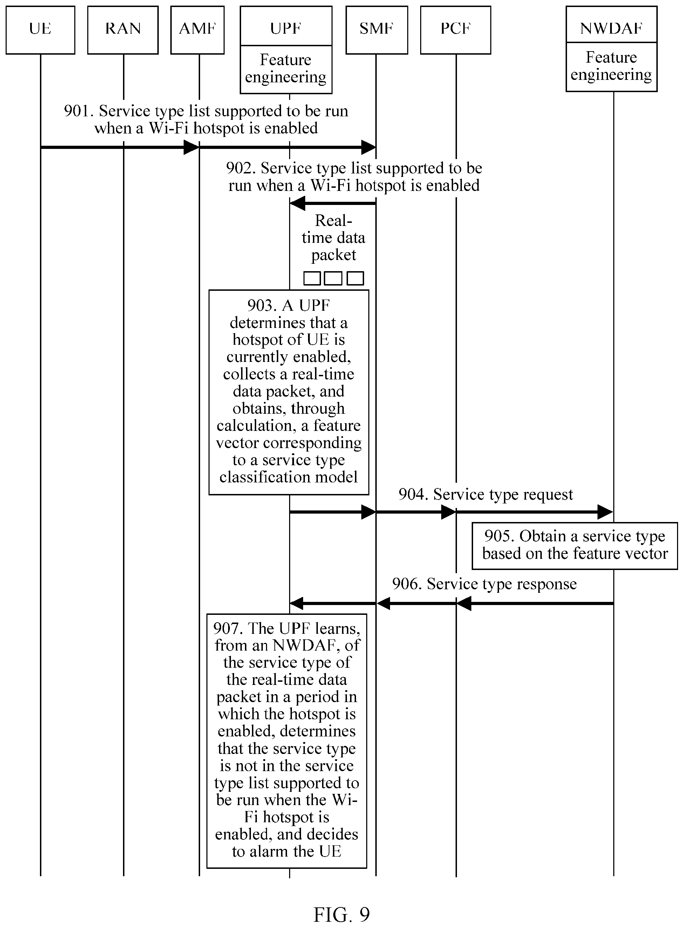

FIG. 9 is another procedure of interaction among a plurality of network elements in a 5G system provided in an embodiment of this application, and the following steps are mainly included:
901. UE sends, to an SMF network element, a service type list supported to be run when a Wi-Fi hotspot is enabled.

902. The SMF network element sends, to a UPF network element, the service type list supported to be run when the Wi-Fi hotspot is enabled.

The UE sends a hotspot state and a service type list allowed or unallowed to be run in the state to a network. For example, a service type list supported to be run only when a WLAN is enabled is sent to the network, or a service type list not supported when the WLAN is enabled is sent to the network.

The allowed service type list is optional. If the SMF network element determines whether there is abnormal traffic, the service type list information does not need to be sent to the UPF network element. If the UPF network element determines whether there is abnormal traffic, the service type list needs to be sent to the UPF network element. The state and the list are not required to be sent in a same message. The state and the list may be sent in a session modification procedure when a user enables the hotspot, but the allowed service list in a hotspot enabled state may be sent, as a capability of the UE, to the network in a session establishment procedure.

903. The UPF network element determines that the hotspot of the UE is currently enabled, collects a real-time data packet, and obtains, through calculation, a feature vector corresponding to a service type determining model. The UPF network element reports the feature vector of the data to an NWDAF network element.

904. The UPF network element sends a service type request to the NWDAF network element.

905. The NWDAF network element obtains a service type based on the feature vector.

The NWDAF network element obtains, through analysis based on the feature vector reported by the UPF network element, the service type of the data.

906. The NWDAF network element sends a service type response to the UPF network element.

The NWDAF network element sends an analysis result to the SMF network element or the UPF network element.

907. The UPF network element learns, from the NWDAF network element, of the service type of the real-time data packet in the period in which the hotspot is enabled, determines that the service type is not in the service type list supported to be run when the Wi-Fi hotspot is enabled, and decides to alarm the UE.

For example, the UE is notified, in a control signaling manner, that currently there is abnormal traffic. This is similar to the manner A in the embodiment shown in FIG. 8A, FIG. 8B, and FIG. 8C. For another example, the UE is notified, in a data message manner, that currently there is abnormal traffic. This is similar to the manner B in the embodiment shown in FIG. 8A, FIG. 8B, and FIG. 8C.

In this embodiment, in a manner of reporting by the UE, the network-side network elements related to data processing learn of the service type list allowed/unallowed in a specific state (the Wi-Fi hotspot enabled state, or the like), and the NWDAF network element analyzes the service type of the current data and feeds back to the network elements related to data processing, thereby determining whether the current service data is abnormal traffic, and sending an abnormal traffic indication to the UE, so that the UE may perform further processing.

This embodiment differs from the embodiment shown in FIG. 7A and FIG. 7B in that, the UE sends the service type list allowed in a Wi-Fi hotspot enabled state to the network (such as the SMF network element/UPF network element receive) in advance; after receiving the service type information of the current data obtained by the NWDAF network element through analysis, the SMF or the UPF can determine whether the current data service is abnormal traffic; and if the current data service is abnormal traffic, the UE is alarmed.

To better implement the foregoing solutions of the embodiments of this application, the following further provides related apparatuses for implementing the foregoing solutions.

Referring to FIG. 10-a, a user plane apparatus 1000 provided in an embodiment of this application may include: a receiving module 1001, an obtaining module 1002, and a determining module 1003.

The receiving module 1001 is configured to receive hotspot indication information from a terminal device, where the hotspot indication information includes that a hotspot switch is enabled.

The obtaining module 1002 is configured to: obtain a characteristic parameter of a first data packet, and send a characteristic parameter of the first data packet to a data analytics network element, where the first data packet is data obtained by the user plane apparatus in a period in which the hotspot switch of the terminal device is enabled.

The determining module 1003 is configured to determine that traffic corresponding to the first data packet is abnormal traffic.

In some embodiments of this application, as shown in FIG. 10-b, the user plane apparatus 1000 further includes: a sending module 1004.

The sending module 1004 is configured to: after the determining module 1003 determines that the traffic corresponding to the first data packet is abnormal traffic, send a traffic abnormality notification to the terminal device, where the traffic abnormality notification is used to notify that the traffic corresponding to the first data packet is abnormal traffic.

In some embodiments of this application, the sending module 1003 is specifically configured to add the traffic abnormality notification to a data message.

In some embodiments of this application, the determining module 1003 is specifically configured to receive the traffic abnormality notification from the data analytics network element or a control plane network element.

In some embodiments of this application, the determining module 1003 includes:
a receiving submodule 10031, configured to: receive a service type that is from the data analytics network element or the terminal device and that the terminal device allows or does not allow to be used in the period in which the hotspot switch is enabled, and receive a service type that is from the data analytics network element and that is of the first data packet; and
an abnormal traffic determining submodule 10032, configured to determine, based on the service type that the terminal device allows or does not allow to be used in the period in which the hotspot switch is enabled, that the traffic corresponding to the first data packet is abnormal traffic.

In some embodiments of this application, as shown in FIG. 10-c, the user plane apparatus 1000 further includes a traffic buffering module 1005, configured to: after the determining module 1003 determines that the traffic corresponding to the first data packet is abnormal traffic, stop sending a data packet corresponding to the abnormal traffic and buffer the data packet corresponding to the abnormal traffic.

In some embodiments of this application, as shown in FIG. 10-d, the user plane apparatus 1000 further includes: a traffic processing module 1006.

The receiving module 1001 is further configured to receive a traffic abnormality answer from the terminal device, where the traffic abnormality answer includes that: there is traffic abnormality or there is no traffic abnormality.

The traffic processing module 1006 is configured to: when it is determined, based on the traffic abnormality answer, that the traffic corresponding to the first data packet is abnormal traffic, discard the data packet that corresponds to the abnormal traffic and is buffered by the user plane apparatus; or when it is determined, based on the traffic abnormality answer, that the traffic corresponding to the first data packet is not abnormal traffic, send the data packet that corresponds to the abnormal traffic and is buffered by the user plane apparatus.

In some embodiments of this application, as shown in FIG. 10-b, the user plane apparatus further includes: a sending module 1004.

The receiving module 1001 is further configured to receive a traffic abnormality answer from the terminal device, where the traffic abnormality answer includes that: there is traffic abnormality or there is no traffic abnormality.

The sending module 1004 is further configured to send the traffic abnormality answer to the data analytics network element.

Referring to FIG. 11-a, a terminal device 1100 provided in an embodiment of this application includes: a sending module 1101, configured to send hotspot indication information to a core network network element, where the hotspot indication information includes that a hotspot switch is enabled; and an obtaining module 1102, configured to obtain a traffic abnormality notification from the core network network element based on the hotspot indication information.

In a possible design of this embodiment of this application, the sending module 1101 is further configured to send, to the core network network element, a service type that the terminal device does not allow or allows to be used in the period in which the hotspot switch is enabled. Specifically, the terminal device, when performing reporting to the core network network element, may add, when sending first-time Wi-Fi hotspot (hotspot) information to the core network network element, the service type that the terminal does not allow or allows to be used in the period in which the Wi-Fi hotspot is enabled.

In a possible design of this embodiment of this application, the sending module 1101 is further configured to: after the obtaining module 1102 obtains the traffic abnormality notification from the core network network element based on the hotspot indication information, send a traffic abnormality answer to the core network network element, where the traffic abnormality answer includes that: there is traffic abnormality or there is no traffic abnormality.

In a possible design of this embodiment of this application, as shown in FIG. 11-b, the terminal device 1100 further includes an abnormality processing module 1103, configured to: after the obtaining module 1102 obtains the traffic abnormality notification from the core network network element based on the hotspot indication information, disable the hotspot based on the traffic abnormality notification; or disable a connection that is of a hotspot user and that generates abnormal traffic; or prohibit a service type generating abnormal traffic from using the hotspot.

In a possible design of this embodiment of this application, the core network network element includes at least one of: a control plane function network element, a user plane function network element, a policy network element, and a data analytics network element.

In the foregoing embodiments, it can be learned from the descriptions of the traffic management method provided in the embodiments of this application that, the terminal device sends the hotspot indication information to the core network network element, and the terminal device obtains the traffic abnormality notification from the core network network element based on the hotspot indication information, so that the terminal device may determine, based on the traffic abnormality notification, data packets corresponding to abnormal traffic.

As shown in FIG. 12-a, an embodiment of this application further provides a data analytics network element 1200. The data analytics network element 1200 includes:
an obtaining module 1201, configured to obtain a service type that a terminal device allows or does not allow to be used in a period in which a wireless fidelity hotspot switch is enabled;
a receiving module 1202, configured to receive a characteristic parameter of a first data packet from a user plane function network element, where the first data packet is a data packet obtained by the user plane function network element in the period in which the hotspot switch of the terminal device is enabled;
a service type determining module 1203, configured to determine, based on the characteristic parameter of the first data packet, a service type of the first data packet; and
an abnormal traffic determining module 1204, configured to determine, based on the service type that the terminal device allows or does not allow to be used in the period in which the hotspot switch is enabled, that traffic corresponding to the first data packet is abnormal traffic.

In a possible design of this embodiment of this application, as shown in FIG. 12-b, the data analytics network element 1200 further includes: a sending module 1203, configured to send, after the abnormal traffic determining module 1204 determines that the traffic corresponding to the first data packet is abnormal traffic, a traffic abnormality notification to a control plane function network element or the user plane function network element, where the traffic abnormality notification is used to notify that the traffic corresponding to the first data packet is abnormal traffic.

In a possible design of this embodiment of this application, the obtaining module 1201 is specifically configured to: obtain, based on training data, the service type that the terminal device allows or does not allow to be used in the period in which the hotspot switch is enabled; or receive the service type that the terminal device allows or does not allow to be used in the period in which the hotspot switch is enabled and that is from the terminal device.

In a possible design of this embodiment of this application, the receiving module 1202 is further configured to receive a traffic abnormality answer from the terminal device, where the traffic abnormality answer includes that: there is traffic abnormality or there is no traffic abnormality; and the data analytics network element updates, based on the traffic abnormality answer, the service type that the terminal device allows or does not allow to be used in the period in which the hotspot switch is enabled.

As shown in FIG. 13, an embodiment of this application further provides a data analytics network element 1300, including:
an obtaining module 1301, configured to obtain a service type that a terminal device allows or does not allow to be used in a period in which a wireless fidelity hotspot switch is enabled;
a sending module 1302, configured to send, to a user plane function network element or a control plane function network element, the service type that the terminal device allows to be used in the period in which the hotspot switch is enabled;
a receiving module 1303, configured to receive a characteristic parameter of a first data packet from the user plane function network element, where the first data packet is data obtained by the user plane function network element in the period in which the hotspot switch of the terminal device is enabled;
a service type determining module 1304, configured to determine, based on the characteristic parameter of the first data packet, a service type of the first data packet; and
the sending module 1302, further configured to send the service type of the first data packet to the user plane function network element or the control plane function network element.

In a possible design of this embodiment of this application, the obtaining module 1301 is specifically configured to obtain, based on training data, the service type that the terminal device allows or does not allow to be used in the period in which the hotspot switch is enabled.

In the foregoing embodiments, it can be learned from the descriptions of the example of the data analytics network element provided in the embodiments of this application that, in this embodiment of this application, the data analytics network element may obtain the service type of the first data packet from the user plane function network element, and may determine, based on the service type that the terminal device allows or does not allow to be used in the period in which the hotspot switch is enabled, that the traffic corresponding to the first data packet is abnormal traffic, thereby accurately identifying the abnormal traffic and improving traffic management effects.

Referring to FIG. 14, an embodiment of this application provides a control plane function network element 1400, including:
a receiving module 1401, configured to receive hotspot indication information from a terminal device, where the hotspot indication information includes that a hotspot switch of the terminal device is enabled;
the receiving module 1401, further configured to receive a characteristic parameter of a first data packet from a user plane function network element;
a sending module 1402, configured to send the characteristic parameter of the first data packet to a data analytics network element, where the first data packet is data obtained by the user plane function network element in a period in which the hotspot switch of the terminal device is enabled; and
an abnormal traffic determining module 1403, configured to determine that traffic corresponding to the first data packet is abnormal traffic.

In a possible design of this embodiment of this application, the sending module 1402 is further configured to: after the abnormal traffic determining module 1403 determines that the traffic corresponding to the first data packet is abnormal traffic, send a traffic abnormality notification to the terminal device, where the traffic abnormality notification is used to notify that the traffic corresponding to the first data packet is abnormal traffic.

In a possible design of this embodiment of this application, the sending module 1402 is specifically configured to add the traffic abnormality notification to control signaling. Specifically, the control signaling may use but is not limited to using two procedure messages in the following examples. One is a Service Request procedure initiated by a network side, and the traffic abnormality notification is carried in a Paging message for transmission to UE; and the other one is a PDU Session Modification procedure initiated by the network side, and the traffic abnormality notification is carried in a PDU Session Modification Accept message for transmission to the UE.

In a possible design of this embodiment of this application, the abnormal traffic determining module 1403 is specifically configured to receive the traffic abnormality notification from the data analytics network element or the user plane function network element.

In a possible design of this embodiment of this application, the abnormal traffic determining module 1403 is specifically configured to: receive a service type that is from the data analytics network element or the terminal device and that the terminal device allows or does not allow to be used in the period in which the hotspot switch is enabled; receive a service type that is from the data analytics network element or the terminal device and that is of the first data packet; and determine, based on the service type that the terminal device allows or does not allow to be used in the period in which the hotspot switch is enabled, that the traffic corresponding to the first data packet is abnormal traffic.

In a possible design of this embodiment of this application, the abnormal traffic determining module 1403 is specifically configured to: receive a service type that is from the terminal device and that the terminal device allows or does not allow to be used in the period in which the hotspot switch is enabled; receive a service type that is from the data analytics network element or the terminal device and that is of the first data packet; and determine, based on the service type that the terminal device allows or does not allow to be used in the period in which the hotspot switch is enabled, that the traffic corresponding to the first data packet is abnormal traffic.

In a possible design of this embodiment of this application, the sending module 1402 is further configured to: after the abnormal traffic determining module determines that the traffic corresponding to the first data packet is abnormal traffic, instruct the user plane function network element to stop sending the traffic corresponding to the first data packet, and to buffer the traffic corresponding to the first data packet.

In a possible design of this embodiment of this application, the receiving module 1401 is further configured to: receive a traffic abnormality answer from the terminal device, where the traffic abnormality answer includes that: there is traffic abnormality or there is no traffic abnormality; and the sending module is further configured to: when it is determined, based on the traffic abnormality answer, that the traffic corresponding to the first data packet is abnormal traffic, instruct the user plane function network element to discard the buffered data packet corresponding to the abnormal traffic; or when it is determined, based on the traffic abnormality answer, that the traffic corresponding to the first data packet is not abnormal traffic, instruct the user plane function network element to forward the buffered data packet corresponding to the abnormal traffic.

In a possible design of this embodiment of this application, the receiving module 1401 is further configured to receive the traffic abnormality answer from the terminal device, where the traffic abnormality answer includes that: there is traffic abnormality or there is no traffic abnormality; and the control plane function network element forwards the traffic abnormality answer to the data analytics network element.

In the foregoing embodiments, it can be learned from the descriptions of the example of the control plane function network element provided in the embodiments of this application that, in this embodiment of this application, the control plane function network element may obtain the service type of the first data packet from the user plane function network element, and may determine, based on the service type that the terminal device allows or does not allow to be used in the period in which the hotspot switch is enabled, that the traffic corresponding to the first data packet is abnormal traffic, thereby accurately identifying the abnormal traffic and improving traffic management effects.

It should be noted that, content such as information exchanges between modules/units of the foregoing apparatus and execution processes is based on a conception the same as that of the method embodiments in the embodiments of this application, and brings technical effects the same as those of the method embodiments in the embodiments of this application. For specific content, refer to the descriptions in the foregoing method embodiments in the embodiments of this application. Details are not described herein again.

An embodiment of this application further provides a computer storage medium. The computer storage medium stores a program, and the program performs some or all of the steps described in the foregoing method embodiments.

Another user plane apparatus provided in an embodiment of this application is described below. Referring to FIG. 15, the user plane apparatus 1500 includes:
a receiver 1501, a transmitter 1502, a processor 1503, and a memory 1504 (a quantity of the processors 1503 in the user plane apparatus 1500 may be one or more, and an example in which there is one processor is used in FIG. 15). In some embodiments of this application, the receiver 1501, the transmitter 1502, the processor 1503, and the memory 1504 may be connected by using a bus or in another manner. Connection by using the bus is used as an example in FIG. 15.

The memory 1504 may include a read-only memory and a random access memory, and provide an instruction and data to the processor 1503. A part of the memory 1504 may further include a non-volatile random access memory (English full name: Non-Volatile Random Access Memory, NVRAM for short). The memory 1504 stores an operating system and an operation instruction, an executable module, or a data structure, or a subset thereof, or an extended set thereof. The operation instruction may include various operation instructions used to implement various operations. The operating system may include various system programs, configured to: implement various basic services and process a hardware-based task.

The processor 1503 controls an operation of the user plane apparatus, and the processor 1503 may further be referred to as a central processing unit (English full name: Central Processing Unit, CPU for short). In a specific application, components of the user plane apparatus are coupled together through a bus system. In addition to a data bus, the bus system further includes a power bus, a control bus, a state signal bus, or the like. However, for clear description, various types of buses are marked as the bus system in FIG. 15.

The method disclosed in the foregoing embodiments of this application may be applied to the processor 1503, or may be implemented by the processor 1503. The processor 1503 may be an integrated circuit chip and has a signal processing capability. In an implementation process, steps in the foregoing methods can be implemented by using a hardware integrated logical circuit in the processor 1503, or by using instructions in a form of software. The processor 1503 may be a general purpose processor, a digital signal processor (English full name: digital signal processing, DSP for short), an application specific integrated circuit (English full name: Application Specific Integrated Circuit, ASIC for short), a field-programmable gate array (English full name: Field-Programmable Gate Array, FPGA for short) or another programmable logical device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1504, and a processor 1503 reads information in the memory 1504 and completes the steps in the foregoing methods in combination with hardware of the processor.

The receiver 1501 may be configured to: receive input number or character information, and generate signal input related to relevant settings of the user plane apparatus and to function control. The transmitter 1502 may include a display screen or another display device, and the transmitter 1502 may be configured to output the number or character information through an external interface.

In this embodiment of this application, the receiver 1501 and the transmitter 1502 are configured to implement data receiving and sending. The processor 1503 is configured to implement data receiving and sending through the receiver 1501 and the transmitter 1502, to complete the data processing process performed by the foregoing user plane function network element.

Another terminal device provided in an embodiment of the present invention is described below. Referring to FIG. 16, the terminal device 1600 includes:
a receiver 1601, a transmitter 1602, a processor 1603, and a memory 1604 (a quantity of the processors 1603 in the terminal device 1600 may be one or more, and an example in which there is one processor is used in FIG. 16). In some embodiments of the present invention, the receiver 1601, the transmitter 1602, the processor 1603, and the memory 1604 may be connected by using a bus or in another manner. Connection by using the bus is used as an example in FIG. 16.

The memory 1604 may include a read-only memory and a random access memory, and provide an instruction and data to the processor 1603. A part of the memory 1604 may further include an NVRAM. The memory 1604 stores an operating system and an operation instruction, an executable module, or a data structure, or a subset thereof, or an extended set thereof. The operation instruction may include various operation instructions used to implement various operations. The operating system may include various system programs, configured to: implement various basic services and process a hardware-based task.

The processor 1603 controls an operation of the terminal device, and the processor 1603 may further be referred to as a CPU. In a specific application, components of the terminal device are coupled together through a bus system. In addition to a data bus, the bus system further includes a power bus, a control bus, a state signal bus, or the like. However, for clear description, various types of buses in the figure are marked as the bus system.

The method disclosed in the foregoing embodiments of the present invention may be applied to the processor 1603, or may be implemented by the processor 1603. The processor 1603 may be an integrated circuit chip and has a signal processing capability. In an implementation process, steps in the foregoing methods can be implemented by using a hardware integrated logical circuit in the processor 1603, or by using instructions in a form of software. The foregoing processor 1603 may be a general purpose processor, a DSP, an ASIC, an FPGA or another programmable logical device, a discrete gate or transistor logic device, or a discrete hardware component. It may implement or perform the methods, the steps, and logical block diagrams that are disclosed in the embodiments of the present invention. The general purpose processor may be a microprocessor, or the processor may be any conventional processor or the like. Steps of the methods disclosed with reference to the embodiments of the present invention may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1604, and a processor 1603 reads information in the memory 1604 and completes the steps in the foregoing methods in combination with hardware of the processor.

The receiver 1601 and the transmitter 1602 are configured to implement data receiving and sending. The processor 1603 is configured to implement data receiving and sending through the receiver 1601 and the transmitter 1602, to complete the data processing process performed by the foregoing terminal device.

Another data analytics network element provided in an embodiment of the present invention is described below. Referring to FIG. 17, the data analytics network element 1700 includes:
a receiver 1701, a transmitter 1702, a processor 1703, and a memory 1704 (a quantity of the processors 1703 in the data analytics network element 1700 may be one or more, and an example in which there is one processor is used in FIG. 17). In some embodiments of the present invention, the receiver 1701, the transmitter 1702, the processor 1703, and the memory 1704 may be connected by using a bus or in another manner. Connection by using the bus is used as an example in FIG. 17.

The memory 1704 may include a read-only memory and a random access memory, and provide an instruction and data to the processor 1703. A part of the memory 1704 may further include an NVRAM. The memory 1704 stores an operating system, an operation instruction, an executable module, or a data structure, or a subset thereof, or an extended set thereof. The operation instruction may include various operation instructions, to implement various operations. The operating system may include various system programs, configured to implement various basic services and process a hardware-based task.

The processor 1703 controls an operation of the data analytics network element, and the processor 1703 may further be referred to as a CPU. In a specific application, components of the data analytics network element are coupled together through a bus system. In addition to a data bus, the bus system further includes a power bus, a control bus, a state signal bus, or the like. However, for clear description, various types of buses in the figure are marked as the bus system.

The method disclosed in the foregoing embodiments of the present invention may be applied to the processor 1703, or may be implemented by the processor 1703. The processor 1703 may be an integrated circuit chip and has a signal processing capability. In an implementation process, steps in the foregoing methods can be implemented by using a hardware integrated logical circuit in the processor 1703, or by using instructions in a form of software. The foregoing processor 1703 may be a general purpose processor, a DSP, an ASIC, an FPGA or another programmable logical device, a discrete gate or transistor logic device, or a discrete hardware component. It may implement or perform the methods, the steps, and logical block diagrams that are disclosed in the embodiments of the present invention. The general purpose processor may be a microprocessor, or the processor may be any conventional processor or the like. Steps of the methods disclosed with reference to the embodiments of the present invention may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1704, and a processor 1703 reads information in the memory 1704 and completes the steps in the foregoing methods in combination with hardware of the processor.

The receiver 1701 and the transmitter 1702 are configured to implement data receiving and sending. The processor 1703 is configured to implement data receiving and sending through the receiver 1701 and the transmitter 1702, to complete the data processing process performed by the foregoing data analytics network element.

Another control plane function network element provided in an embodiment of the present invention is described below. Referring to FIG. 18, the control plane function network element 1800 includes:
a receiver 1801, a transmitter 1802, a processor 1803, and a memory 1804 (a quantity of the processors 1803 in the control plane function network element 1800 may be one or more, and an example in which there is one processor is used in FIG. 18). In some embodiments of the present invention, the receiver 1801, the transmitter 1802, the processor 1803, and the memory 1804 may be connected by using a bus or in another manner. Connection by using the bus is used as an example in FIG. 18.

The memory 1804 may include a read-only memory and a random access memory, and provide an instruction and data to the processor 1803. A part of the memory 1804 may further include an NVRAM. The memory 1804 stores an operating system, an operation instruction, an executable module, or a data structure, or a subset thereof, or an extended set thereof. The operation instruction may include various operation instructions, to implement various operations. The operating system may include various system programs, configured to: implement various basic services and process a hardware-based task.

The processor 1803 controls an operation of the control plane function network element, and the processor 1803 may further be referred to as a CPU. In a specific application, components of the control plane function network element are coupled together through a bus system. In addition to a data bus, the bus system further includes a power bus, a control bus, a state signal bus, or the like. However, for clear description, various types of buses in the figure are marked as the bus system.

The method disclosed in the foregoing embodiments of the present invention may be applied to the processor 1803, or may be implemented by the processor 1803. The processor 1803 may be an integrated circuit chip and has a signal processing capability. In an implementation process, steps in the foregoing methods can be implemented by using a hardware integrated logical circuit in the processor 1803, or by using instructions in a form of software. The foregoing processor 1803 may be a general purpose processor, a DSP, an ASIC, an FPGA or another programmable logical device, a discrete gate or transistor logic device, or a discrete hardware component. It may implement or perform the methods, the steps, and logical block diagrams that are disclosed in the embodiments of the present invention. The general purpose processor may be a microprocessor, or the processor may be any conventional processor or the like. Steps of the methods disclosed with reference to the embodiments of the present invention may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1804, and a processor 1803 reads information in the memory 1804 and completes the steps in the foregoing methods in combination with hardware of the processor.

The receiver 1801 and the transmitter 1802 are configured to implement data receiving and sending. The processor 1803 is configured to implement data receiving and sending through the receiver 1801 and the transmitter 1802, to complete the data processing process performed by the foregoing control plane function network element.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided in the embodiments of this application, connection relationships between modules indicate that the modules have communication connections with each other, which may be specifically implemented as one or more communications buses or signal cables.

Based on the description of the foregoing implementations, a person skilled in the art may clearly understand that the embodiments of this application may be implemented by using software in addition to necessary universal hardware, or by using special-purpose hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, for the embodiments of this application, software program implementation is a better implementation in most cases. Based on such an understanding, the technical solutions in the embodiments of this application essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of this application.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A traffic processing method performed by a user plane function network element, wherein the method comprises:
**a.)** receiving hotspot indication information from a terminal device, wherein the hotspot indication information indicates that a hotspot switch is enabled (step 201);
**b.)** obtaining a characteristic parameter of a data packet, and sending the characteristic parameter of the data packet to a data analytics network element, wherein the data packet is data obtained by the user plane function network element in a period in which the hotspot switch of the terminal device is enabled (step 202);
**c.)** determining that traffic corresponding to the data packet is abnormal traffic (step 203),
wherein the determining that traffic corresponding to the data packet is abnormal traffic comprises:
∘ in a first alternative:
receiving a traffic abnormality notification from the data analytics network element;
∘ in a second alternative:
▪ receiving a service type that the terminal device allows or does not allow to be used in the period in which the hotspot switch is enabled from the data analytics network element or the terminal device;
▪ receiving a service type of the data packet from the data analytics network element; and
▪ determining, based on the service type that the terminal device allows or does not allow to be used in the period in which the hotspot switch is enabled and based on the service type of the data packet, that the traffic corresponding to the data packet is the abnormal traffic;
**d.)** after determining that the traffic corresponding to the data packet is abnormal traffic:
∘ stopping sending a data packet corresponding to the abnormal traffic, and buffering the data packet corresponding to the abnormal traffic;
∘ sending a traffic abnormality notification to the terminal device, wherein the traffic abnormality notification is used to notify that the traffic corresponding to the data packet is the abnormal traffic;
**e.)** after sending the traffic abnormality notification to the terminal device, receiving a traffic abnormality answer from the terminal device, wherein the traffic abnormality answer comprises that: there is traffic abnormality or there is no traffic abnormality; and
**f.)** when the user plane function network element determines, based on the traffic abnormality answer, that the traffic corresponding to the data packet is the abnormal traffic:
∘ discarding the data packet that corresponds to the abnormal traffic and is buffered by the user plane function network element;
when the user plane function network element determines, based on the traffic abnormality answer, that the traffic corresponding to the data packet is not the abnormal traffic:
∘ sending the data packet that corresponds to the abnormal traffic and is buffered by the user plane function network element.

2. The method according to claim 1, wherein the sending the traffic abnormality notification to the terminal device comprises:
adding the traffic abnormality notification to a data message.

3. The method according to any one of claims 1 to 2, wherein the method further comprises:
after the reception of the traffic abnormality answer from the terminal device,
sending the traffic abnormality answer to the data analytics network element.

4. A user plane function apparatus, comprising: at least one processor coupled with a memory, wherein the at least one processor is configured to execute instructions stored in the memory, to enable the apparatus to perform the steps in the method in any one of claims 1 to 3.

5. A computer readable storage medium, wherein the computer readable storage medium stores an instruction, and when the instruction runs on a computer, the computer is enabled to perform the method according to any one of claims 1 to 3.

## Patentansprüche

1. Verfahren zur Verkehrsverarbeitung, das durch ein Funktionsnetzwerkelement auf Benutzerebene durchgeführt wird, wobei das Verfahren Folgendes umfasst:
**a.)** Empfangen von Hotspot-Angabeinformationen von einem Endgerät, wobei die Hotspot-Angabeinformationen angeben, dass ein Hotspot-Schalter aktiviert ist (Schritt 201);
**b.)** Erlangen eines charakteristischen Parameters eines Datenpakets, und
Senden des charakteristischen Parameters des Datenpakets an ein Datenanalysenetzwerkelement, wobei es sich bei dem Datenpaket um Daten handelt, die durch das Funktionsnetzwerkelement auf Benutzerebene in einem Zeitraum erlangt werden, in dem der Hotspot-Schalter des Endgerätes aktiviert ist (Schritt 202);
**c.)** Bestimmen, dass es sich bei dem Verkehr, der dem Datenpaket entspricht, um anormalen Verkehr handelt (Schritt 203),
wobei das Bestimmen, dass es sich bei dem Verkehr, der dem Datenpaket entspricht, um anormalen Verkehr handelt, Folgendes umfasst:
∘ in einer ersten Alternative:
Empfangen einer Verkehrsanomaliebenachrichtigung von dem Datenanalysenetzwerkelement;
∘ in einer zweiten Alternative:
▪ Empfangen eines Diensttyps, dessen Nutzung das Endgerät in dem Zeitraum, in dem der Hotspot-Schalter aktiviert ist, erlaubt oder nicht erlaubt, von dem Datenanalysenetzwerkelement oder dem Endgerät;
▪ Empfangen eines Diensttyps des Datenpakets von dem Datenanalysenetzwerkelement; und
▪ Bestimmen, basierend auf dem Diensttyp, dessen Nutzung das Endgerät in dem Zeitraum, in dem der Hotspot-Schalter aktiviert ist, erlaubt oder nicht erlaubt, und basierend auf dem Diensttyp des Datenpakets, dass es sich bei dem Verkehr, der dem Datenpaket entspricht, um den anormalen Verkehr handelt;
**d.)** nach dem Bestimmen, dass es sich bei dem Verkehr, der dem Datenpaket entspricht, um anormalen Verkehr handelt:
∘ Stoppen des Sendens eines Datenpakets, das dem anormalen Verkehr entspricht, und Puffern des Datenpakets, das dem anormalen Verkehr entspricht;
∘ Senden einer Verkehrsanomaliebenachrichtigung an das Endgerät, wobei die Verkehrsanomaliebenachrichtigung verwendet wird, um zu benachrichtigen, dass es sich bei dem Verkehr, das dem Datenpaket entspricht, um den anormalen Verkehr handelt;
**e.)** nach dem Senden der Verkehrsanomaliebenachrichtigung an das Endgerät, Empfangen einer Verkehrsanomalieantwort von dem Endgerät, wobei die Verkehrsanomalieantwort Folgendes umfasst: es gibt eine Verkehrsanomalie oder es gibt keine Verkehrsanomalie; und
**f.)** wenn das Funktionsnetzwerkelement auf Benutzerebene basierend auf der Verkehrsanomalieantwort bestimmt, dass es sich bei dem Verkehr, der dem Datenpaket entspricht, um den anormalen Verkehr handelt:
∘ Verwerfen des Datenpakets, das dem anormalen Verkehr entspricht und durch das Funktionsnetzwerkelement auf Benutzerebene gepuffert ist;
wenn das Funktionsnetzwerkelement auf Benutzerebene basierend auf der Verkehrsanomalieantwort bestimmt, dass es sich bei dem Verkehr, der dem Datenpaket entspricht, nicht um den anormalen Verkehr handelt:
∘ Senden des Datenpakets, das dem anormalen Verkehr entspricht und durch das Funktionsnetzwerkelement auf Benutzerebene gepuffert ist.

2. Verfahren nach Anspruch 1, wobei das Senden der Verkehrsanomaliebenachrichtigung an das Endgerät Folgendes umfasst:
Hinzufügen der Verkehrsanomaliebenachrichtigung zu einer Datennachricht.

3. Verfahren nach einem der Ansprüche 1 bis 2, wobei das Verfahren ferner Folgendes umfasst:
nach dem Empfang der Verkehrsanomalieantwort von dem Endgerät, Senden der Verkehrsanomalieantwort an das Datenanalysenetzwerkelement.

4. Funktionsvorrichtung auf Benutzerebene, umfassend: mindestens einen Prozessor, der mit einem Speicher gekoppelt ist, wobei der mindestens eine Prozessor dazu konfiguriert ist, in dem Speicher gespeicherte Anweisungen auszuführen, um der Vorrichtung zu ermöglichen, die Schritte in dem Verfahren nach einem der Ansprüche 1 bis 3 durchzuführen.

5. Computerlesbares Speichermedium, wobei das computerlesbare Speichermedium eine Anweisung speichert und, wenn die Ausführung der Anweisung auf einem Computer ausgeführt wird, dem Computer ermöglicht wird, das Verfahren nach einem der Ansprüche 1 bis 3 durchzuführen.

## Revendications

1. Procédé de traitement de trafic exécuté par un élément de réseau à fonction de plan utilisateur, dans lequel le procédé comprend :
**a.)** la réception d'informations d'indication de point d'accès en provenance d'un dispositif terminal, dans lequel les informations d'indication de point d'accès indiquent qu'un commutateur de point d'accès est activé (étape 201) ;
**b.)** l'obtention d'un paramètre caractéristique d'un paquet de données, et
l'envoi du paramètre caractéristique du paquet de données à un élément de réseau d'analyse de données, dans lequel le paquet de données est des données obtenues par l'élément de réseau à fonction de plan utilisateur dans une période au cours de laquelle le commutateur de point d'accès du dispositif terminal est activé (étape 202) ;
**c.)** la détermination que le trafic correspondant au paquet de données est un trafic anormal (étape 203),
dans lequel la détermination que le trafic correspondant au paquet de données est un trafic anormal comprend :
∘ dans une première variante :
la réception d'une notification d'anomalie de trafic de l'élément de réseau d'analyse de données ;
∘ dans une seconde variante :
▪ la réception d'un type de service que le dispositif terminal permet ou ne permet pas d'utiliser pendant la période au cours de laquelle le commutateur de point d'accès est activé à partir de l'élément de réseau d'analyse de données ou du dispositif terminal ;
▪ la réception d'un type de service du paquet de données en provenance de l'élément de réseau d'analyse de données ; et
▪ la détermination, sur la base du type de service que le dispositif terminal permet ou ne permet pas d'utiliser pendant la période au cours de laquelle le commutateur de point d'accès est activé et sur la base du type de service du paquet de données, que le trafic correspondant au paquet de données est le trafic anormal ;
**d.)** après la détermination que le trafic correspondant au paquet de données est un trafic anormal :
∘ l'arrêt de l'envoi d'un paquet de données correspondant au trafic anormal, et la mise en mémoire tampon du paquet de données correspondant au trafic anormal ;
∘ l'envoi d'une notification d'anomalie de trafic au dispositif terminal, dans lequel la notification d'anomalie de trafic est utilisée pour notifier que le trafic correspondant au paquet de données est le trafic anormal ;
e.) après l'envoi de la notification d'anomalie de trafic au dispositif terminal, la réception d'une réponse d'anomalie de trafic en provenance du dispositif terminal, dans lequel la réponse d'anomalie de trafic comprend ce qui suit : il y a une anomalie de trafic ou il n'y a pas d'anomalie de trafic ; et
**f.)** lorsque l'élément de réseau à fonction de plan utilisateur détermine, sur la base de la réponse d'anomalie de trafic, que le trafic correspondant au paquet de données est le trafic anormal :
∘ le rejet du paquet de données qui correspond au trafic anormal et qui est mis en mémoire tampon par l'élément de réseau à fonction de plan utilisateur ;
lorsque l'élément de réseau à fonction de plan utilisateur détermine, sur la base de la réponse d'anomalie de trafic, que le trafic correspondant au paquet de données n'est pas le trafic anormal :
∘ l'envoi du paquet de données qui correspond au trafic anormal et qui est mis en mémoire tampon par l'élément de réseau à fonction de plan utilisateur.

2. Procédé selon la revendication 1, dans lequel l'envoi de la notification d'anomalie de trafic au dispositif terminal comprend :
l'ajout de la notification d'anomalie de trafic à un message de données.

3. Procédé selon l'une quelconque des revendications 1 et 2, dans lequel le procédé comprend en outre :
après la réception de la réponse d'anomalie de trafic en provenance du dispositif terminal, l'envoi de la réponse d'anomalie de trafic à l'élément de réseau d'analyse de données.

4. Appareil de fonction de plan utilisateur, comprenant : au moins un processeur couplé à une mémoire, dans lequel l'au moins un processeur est configuré pour exécuter des instructions stockées dans la mémoire, pour permettre à l'appareil d'exécuter les étapes du procédé selon l'une quelconque des revendications 1 à 3.

5. Support de stockage lisible par ordinateur, dans lequel le support de stockage lisible par ordinateur stocke une instruction, et lorsque l'instruction est exécutée sur un ordinateur, l'ordinateur est en mesure d'exécuter le procédé selon l'une quelconque des revendications 1 à 3.
